# EUROPEAN PATENT APPLICATION

(11) **EP 4 723 349 A1**
(43) Date of publication of application: **08.04.2026**
(21) Application number: 23962932.2
(22) Date of filing: 29.12.2023
(51) Int. Cl.: H01M 50/342, H01M 50/103, H01M 50/107

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); GU, Mingguang, Ningde, Fujian 352100 (CN); LI, Yao, Ningde, Fujian 352100 (CN); LI, Wei, Ningde, Fujian 352100 (CN); CHEN, Shilong, Ningde, Fujian 352100 (CN)
(74) Representative: Gong, Jinping
(86) International application number: PCT/CN2023/143627
(87) International publication number: WO 2025/138258

(57) **Abstract**

Embodiments of the present application provide a battery cell, a battery, and an electrical device, which belong to the technical field of batteries. The battery cell includes a shell and a pressure relief component, where the shell includes a first wall portion, and the pressure relief component is disposed on the first wall portion. The pressure relief component is provided with a first groove, and the pressure relief component is configured to be capable of rupturing along at least part of the first groove when the battery cell undergoes pressure relief. The first groove includes at least one groove segment, a minimum width of a groove bottom surface of the groove segment being W, and along a thickness direction of the first wall portion, a minimum residual thickness of the groove segment being D₁, satisfying: 0.005 mm² ≤ W×D₁ ≤ 0.12 mm². It achieves a balance between the service lifetime requirements of the battery cell during normal use and the reliability requirements of the battery cell during thermal runaway.

## Description

### TECHNICAL FIELD

The present application relates to the technical field of batteries, and in particular, to a battery cell, a battery, and an electrical device.

### BACKGROUND

With the development of new energy technologies, batteries are more and more widely used, such as used in mobile phones, laptops, battery vehicles, electric vehicles, electric aircraft, electric ships, electric toy cars, electric toy ships, electric toy airplanes and power tools.

For general battery cells, battery cells need to meet not only reliability requirements but also service lifetime requirements. Therefore, how to achieve a balance between the service lifetime requirements of the battery cell during normal use and the reliability requirements of the battery cell during thermal runaway is a problem urgently to be solved in battery technologies.

### SUMMARY

Embodiments of the present application provide a battery cell, a battery, and an electrical device, which can achieve a balance between the service lifetime requirements of the battery cell during normal use and the reliability requirements of the battery cell during thermal runaway.

In a first aspect, an embodiment of the present application provides a battery cell including a shell and a pressure relief component, the shell including a first wall portion, where the pressure relief component is disposed on the first wall portion; and the pressure relief component is provided with a first groove, and the pressure relief component is configured to be capable of rupturing along at least part of the first groove when the battery cell undergoes pressure relief, where the first groove includes at least one groove segment, a minimum width of a groove bottom surface of the groove segment being W, and along a thickness direction of the first wall portion, a minimum residual thickness of the groove segment being D₁, satisfying: 0.005 mm² ≤ W×D₁ ≤ 0.12 mm².

In the aforementioned technical solution, the pressure relief component is provided with the first groove, enabling the pressure relief component to rupture along at least part of the first groove when the battery cell undergoes pressure relief, so as to release internal pressure of the battery cell. When W×D₁ ≥ 0.005 mm², a situation where the minimum width of the groove bottom surface of the groove segment is too small and the minimum residual thickness of the groove segment is too small is avoided. This reduces the risk of insufficient fatigue resistance strength in the region of the pressure relief component where the groove segment is disposed due to the minimum width of the groove bottom surface of the groove segment being too small and the minimum residual thickness of the groove segment being too small, enhancing the fatigue resistance strength in the region of the pressure relief component where the groove segment is disposed, and reducing the risk of the pressure relief component rupturing prematurely along the groove segment during normal use of the battery cell, thereby improving the service lifetime of the battery cell. When W×D₁ ≤ 0.12 mm², a situation where the minimum width of the groove bottom surface of the groove segment is too large and the minimum residual thickness of the groove segment is too large is avoided. This alleviates a situation where the strength in the region of the pressure relief component where the groove segment is disposed is too high due to the minimum width of the groove bottom surface of the groove segment being too large and the minimum residual thickness of the groove segment being too large, enabling the pressure relief component to rupture more timely along the groove segment when the battery cell undergoes thermal runaway, which improves the timeliness of pressure relief of the battery cell, and reduces the risk of explosion of the battery cell, thereby improving the reliability of the battery cell. Therefore, 0.005 mm² ≤ W×D₁ ≤ 0.12 mm², which achieves a balance between the service lifetime requirements of the battery cell during normal use and the reliability requirements of the battery cell during thermal runaway.

In some embodiments, 0.01 mm² ≤ W×D₁ ≤ 0.05 mm². When W×D₁ ≥ 0.01 mm², the fatigue resistance strength in the region of the pressure relief component where the groove segment is disposed is further enhanced, which further reduces the risk of the pressure relief component rupturing prematurely along the groove segment during normal use of the battery cell, and further improves the service lifetime of the battery cell; and when W×D₁ ≤ 0.05 mm², the pressure relief component is enabled to rupture more timely along the groove segment when the battery cell undergoes thermal runaway, which further improves the timeliness of pressure relief of the battery cell, and further reduces the risk of explosion of the battery cell.

In some embodiments, 0.05 mm ≤ W ≤ 0.5 mm. When W ≥ 0.05 mm, the minimum width of the groove bottom surface of the groove segment is prevented from being excessively small, thereby reducing the difficulty in forming the groove segment; and when W ≤ 0.5 mm, the minimum width of the groove bottom surface of the groove segment is prevented from being excessively large, and the minimum residual thickness of the groove segment is prevented from being excessively small, which, on the one hand, reduces the risk of the pressure relief component rupturing along the groove segment during formation of the groove segment, thereby improving the forming yield of the pressure relief component, and on the other hand, eliminates the need to machine the groove bottom surface of the groove segment excessively wide, thereby reducing the forming force applied to the pressure relief component during formation of the groove segment.

In some embodiments, 0.1 mm ≤ W ≤ 0.3 mm. This can further reduce the difficulty in forming the groove segment, and further reduce the risk of the pressure relief component rupturing along the groove segment during formation of the groove segment.

In some embodiments, 0.05 mm ≤ D₁ ≤ 0.6 mm. When D₁ ≥ 0.05 mm, the minimum residual thickness of the groove segment is prevented from being excessively small, which, on the one hand, reduces the risk of the pressure relief component rupturing along the groove segment during formation of the groove segment, thereby improving the forming yield of the pressure relief component, and on the other hand, eliminates the need to machine the groove bottom surface of the groove segment excessively wide, thereby reducing the forming force applied to the pressure relief component during formation of the groove segment. When D₁ ≤ 0.6 mm, the minimum residual thickness of the groove segment is prevented from being excessively large, eliminating the need to machine the groove bottom surface of the groove segment excessively narrow, thereby reducing the difficulty in forming the groove segment.

In some embodiments, 0.08 mm ≤ D₁ ≤ 0.4 mm. This can further reduce the risk of the pressure relief component rupturing along the groove segment during formation of the groove segment, and further reduce the difficulty in forming the groove segment.

In some embodiments, the first groove defines at least one predetermined pressure relief region, and the pressure relief component is provided with a second groove, the second groove being configured to guide at least part of the predetermined pressure relief region to flip, so as to open at least part of the predetermined pressure relief region. The second groove provides an auxiliary flipping function for the predetermined pressure relief region, which makes flipping of the predetermined pressure relief region easier, and reduces the flipping difficulty of the predetermined pressure relief region, enabling the predetermined pressure relief region to open more rapidly during the process of the pressure relief component rupturing along the first groove, thereby improving the opening rate of the predetermined pressure relief region.

In some embodiments, a minimum residual thickness of the second groove is D₂, satisfying: D₁ < D₂. This causes the strength in the region of the pressure relief component where the groove segment is disposed to be less than the strength in the region of the pressure relief component where the second groove is disposed, enabling the pressure relief component to rupture preferentially along the first groove, so as to achieve rapid opening of the predetermined pressure relief region.

In some embodiments, along the thickness direction of the first wall portion, a maximum groove depth of the groove segment is H₁, and a maximum groove depth of the second groove is H₂, satisfying: H₂ < H₁. By configuring a structure in which the maximum depth of the groove segment is greater than the maximum depth of the second groove, it is beneficial to enable the minimum residual thickness of the groove segment to be less than the minimum residual thickness of the second groove. During the production process, the depth of the groove segment can be machined deeper compared to the depth of the second groove, thereby enabling the minimum residual thickness of the groove segment to be less than the minimum residual thickness of the second groove.

In some embodiments, the pressure relief component is provided with a plurality of second grooves, and the first groove defines a plurality of predetermined pressure relief regions, each of the predetermined pressure relief regions being disposed in correspondence with at least one of the second grooves. When the battery cell undergoes thermal runaway, the plurality of predetermined pressure relief regions can all open, and given a certain total pressure relief area of the pressure relief component, the opening rate of the predetermined pressure relief regions can be increased, thereby achieving pressure relief more rapidly.

In some embodiments, along the thickness direction of the first wall portion, a projection of the second groove and a projection of the first groove do not overlap. This reduces mutual influence between the first groove and the second groove during machining, thereby lowering the risk of the first groove and the second groove communicating with each other during machining.

In some embodiments, along a width direction of the second groove, the second groove and the first groove are disposed at intervals. This can achieve the effect that the projection of the second groove along the thickness direction of the first wall portion and the projection of the first groove along the thickness direction of the first wall portion do not overlap, which, on the one hand, can reduce mutual influence between the first groove and the second groove during machining, and on the other hand, can reduce influence of residual stress between the region of the pressure relief component where the first groove is disposed and the region of the pressure relief component where the second groove is disposed, and can reduce the risk of ruptures generated by the pressure relief component rupturing along the first groove propagating to the second groove and thus causing the pressure relief component to rupture along the second groove.

In some embodiments, along the thickness direction of the first wall portion, the two ends of a projection of the second groove along an extension direction respectively extend beyond the two end portions of a projection of the first groove. This makes the second groove longer, enhancing the auxiliary flipping effect of the second groove on the predetermined pressure relief region.

In some embodiments, along the thickness direction of the first wall portion, the pressure relief component has a first surface and a second surface oppositely disposed, the first groove being disposed on the first surface, and the second groove being disposed on the second surface. This causes the first groove and the second groove to be located on the two sides of the pressure relief component in the thickness direction, facilitating machining of the first groove and the second groove on the two sides of the pressure relief component, respectively, which is beneficial to reducing mutual influence between the first groove and the second groove during machining.

In some embodiments, the first surface is a surface of the pressure relief component facing an exterior of the shell, and the second surface is a surface of the pressure relief component facing an interior of the shell. The first surface is the surface of the pressure relief component facing the exterior of the shell, causing the first groove to be disposed on an outer side of the pressure relief component, which facilitates forming of the first groove externally to the battery cell, and helps reduce the difficulty in forming the first groove, so as to improve production efficiency of the battery cell. The second surface is the surface of the pressure relief component facing the interior of the shell, causing the second groove to be disposed on an inner side of the pressure relief component, such that, on the one hand, during outward flipping and opening of the predetermined pressure relief region, the two opposite side surfaces of the second groove in the width direction are less likely to abut against each other, which is beneficial to increasing the opening area of the predetermined pressure relief region; and on the other hand, the second groove is not exposed to the exterior of the battery cell, thereby reducing the risk of oxidation and corrosion of the pressure relief component in the region of the second groove.

In some embodiments, along the thickness direction of the first wall portion, the pressure relief component has a second surface facing an interior of the shell, the second groove being disposed on the second surface. This causes the second groove to be disposed on an inner side of the pressure relief component, such that, on the one hand, during outward flipping and opening of the predetermined pressure relief region, two opposite side surfaces of the second groove in the width direction are less likely to abut against each other, which is beneficial to increasing the opening area of the predetermined pressure relief region; and on the other hand, the second groove is not exposed to the exterior of the battery cell, thereby reducing the risk of oxidation and corrosion of the pressure relief component in the region of the second groove.

In some embodiments, the first wall portion is a rectangular wall portion, and the first groove and the second groove are arranged along a width direction of the first wall portion. This causes the second groove to be closer to an edge of the first wall portion in the width direction of the first wall portion, causing the region of the pressure relief component where the second groove is disposed to have higher strength, thereby reducing the risk of the pressure relief component rupturing along the second groove when the battery cell undergoes pressure relief. Furthermore, during normal use of the battery cell, the expansion amount of the battery cell in the width direction of the first wall portion is greater than the expansion amount in a length direction of the first wall portion, such that the expansion of the battery cell in the width direction of the first wall portion has greater influence on the pressure relief component; and the first groove and the second groove are arranged along the width direction of the first wall portion, such that the second groove can provide an excellent absorption effect on the deformation energy of the battery cell when the battery cell expands and deforms along the width direction of the first wall portion, thereby reducing the influence of expansion of the battery cell along the width direction of the first wall portion on the pressure relief component.

In some embodiments, the second groove extends along a linear trajectory. The second groove is a linear groove, having a simple structure and thus being easy to machine and form.

In some embodiments, along the thickness direction of the first wall portion, the pressure relief component has a first surface and a second surface oppositely disposed, and the groove segment includes a multi-stage groove sequentially disposed in a direction from the first surface toward the second surface, where in two adjacent stages of grooves, one stage of groove away from the first surface is disposed on a groove bottom surface of one stage of groove close to the first surface, where one stage of groove in the multi-stage groove that is farthest away from the first surface is a first-stage groove, a minimum residual thickness of the first-stage groove being the minimum residual thickness of the groove segment, and a groove bottom surface of the first-stage groove being the groove bottom surface of the groove segment. By configuring the groove segment to be a multi-stage groove arranged along the thickness direction of the first wall portion, during formation of the groove segment, the various stages of grooves can be machined one by one along the direction from the first surface toward the second surface, which reduces the forming depth of each stage of groove, and reduces the forming force applied to the pressure relief component during forming of the first groove, thereby reducing the risk of the pressure relief component being damaged during forming of the first groove.

In some embodiments, the first groove includes a plurality of groove segments, the plurality of groove segments including a first groove segment and a second groove segment, where the first groove segment is connected with the second groove segment, and the first groove segment and the second groove segment collectively define at least one predetermined pressure relief region. The first groove of such a structure has a simple structure, and stress is more concentrated and weaker at a position where the first groove segment and the second groove segment are connected, which enables the pressure relief component to rupture rapidly along the first groove segment and the second groove segment after rupturing at the position where the first groove segment and the second groove segment are connected when the battery cell undergoes thermal runaway, causing the predetermined pressure relief region to open more rapidly, so as to achieve timely pressure relief.

In some embodiments, the first groove includes a plurality of groove segments, the plurality of groove segments including a first groove segment, a second groove segment, and a third groove segment, where the second groove segment and the third groove segment are oppositely disposed, the first groove segment connects the second groove segment and the third groove segment, and the first groove segment, the second groove segment, and the third groove segment collectively define at least one predetermined pressure relief region. The first groove adopting such a structure causes an intersection position between the first groove segment and the second groove segment and a connection position between the first groove segment and the third groove segment to be weaker. This facilitates easier rupturing and opening of the predetermined pressure relief region for pressure relief, and can further increase the opening area of the predetermined pressure relief region, thereby increasing the pressure relief area of the battery cell and improving the pressure relief rate of the battery cell.

In some embodiments, a connection position between the second groove segment and the first groove segment deviates from the two ends of the second groove segment, and a connection position between the third groove segment and the first groove segment deviates from the two ends of the third groove segment, so as to form the predetermined pressure relief regions on both sides of the first groove segment. This causes the first groove segment of the first groove to be located between two predetermined pressure relief regions, such that after the pressure relief component ruptures along the first groove segment, the two predetermined pressure relief regions can open symmetrically in a split manner for pressure relief when the battery cell undergoes pressure relief, enabling the two predetermined pressure relief regions to open rapidly, which is beneficial to improving the pressure relief rate of the battery cell.

In some embodiments, the first groove segment extends along a linear or arc-shaped trajectory; and/or the second groove segment extends along a linear or arc-shaped trajectory; and/or the third groove segment extends along a linear or arc-shaped trajectory. If the first groove segment extends along a linear trajectory, the first groove segment is a linear groove, which can reduce the difficulty in forming the first groove segment. If the first groove segment extends along an arc-shaped trajectory, the first groove segment is an arc-shaped groove, which enables the pressure relief component to be more likely to rupture along the first groove segment when the battery cell undergoes pressure relief, thereby achieving more rapid opening of the predetermined pressure relief region. If the second groove segment extends along a linear trajectory, the second groove segment is a linear groove, which can reduce the difficulty in forming the second groove segment. If the second groove segment extends along an arc-shaped trajectory, the second groove segment is an arc-shaped groove, which enables the pressure relief component to be more likely to rupture along the second groove segment when the battery cell undergoes pressure relief, thereby achieving more rapid opening of the predetermined pressure relief region. If the third groove segment extends along a linear trajectory, the third groove segment is a linear groove, which can reduce the difficulty in forming the third groove segment. If the third groove segment extends along an arc-shaped trajectory, the third groove segment is an arc-shaped groove, which enables the pressure relief component to be more likely to rupture along the third groove segment when the battery cell undergoes pressure relief, thereby achieving more rapid opening of the predetermined pressure relief region.

In some embodiments, the first groove extends along an arc-shaped trajectory. The first groove extending along an arc-shaped trajectory means that the first groove is an arc-shaped groove. The first groove of such a structure includes only one groove segment, simplifying the structure of the first groove.

In some embodiments, the pressure relief component is integrally formed with the first wall portion. This enables the first groove to be directly formed in the first wall portion, forming an integrated pressure relief structure with higher reliability, thereby eliminating an installation process of the pressure relief component, and offering better economic efficiency.

In some embodiments, the pressure relief component is disposed separately from the first wall portion, and the pressure relief component is installed on the first wall portion. The pressure relief component is a component independent from the shell, and the pressure relief component and the shell may be produced and assembled separately, resulting in lower production difficulty and higher efficiency.

In some embodiments, the first groove is formed by stamping in the pressure relief component. Thus, the method for forming the first groove is simple and contributes to reducing the production cost of the battery cell.

In some embodiments, the shell includes a shell body and an end cover, where at least one end of the shell body is formed with an opening, and the end cover is in one-to-one correspondence with the opening, the end cover closing the opening, where at least one end cover is the first wall portion. This enables the at least one end cover to have a pressure relief function, and results in lower difficulty in forming the first groove on the end cover or in installing the pressure relief component.

In some embodiments, the shell includes a shell body and an end cover, where at least one end of the shell body is formed with an opening, and the end cover is in one-to-one correspondence with the opening, the end cover closing the opening, where at least one wall portion in the shell body is the first wall portion. This enables the shell body to have a pressure relief function. When the battery cell undergoes pressure relief, emissions discharged from the interior of the battery cell are less likely to affect external components on the outer side of the end cover, thereby reducing the risk of the external components being damaged by the emissions.

In some embodiments, only one end of the shell body is formed with the opening, and a wall portion of the shell body disposed opposite to the end cover is the first wall portion. The shell body is of a structure in which one end is formed with an opening, causing the overall structure of the battery cell to be simpler. The first wall portion being a wall portion of the shell body opposite to the end cover can enable directional pressure relief from the bottom of the shell body.

In some embodiments, two opposite ends of the shell body are both formed with the openings, and at least one wall portion in the shell body is the first wall portion. The shell body is of a structure in which both two opposite ends are formed with openings, such that an electrode assembly may be assembled into the shell body through any of the openings, thereby enabling reduction in the assembly difficulty of the battery cell and improving the assembly quality of the battery cell. The shell body of such a structure allows a height (where both ends of the shell body in a height direction are formed with openings) to be made larger, which is beneficial to increasing the electrical capacity of the battery cell.

In some embodiments, a material of the pressure relief component includes a steel material. Steel materials have high-strength characteristics. A pressure relief component made from a steel material has better strength, and given a certain burst pressure of the battery cell, the pressure relief component can be made thinner, thereby reducing volume of the pressure relief component.

In some embodiments, the steel material is carbon steel or stainless steel.

In some embodiments, a material of the pressure relief component includes aluminum alloy. Aluminum alloy has lightweight and good ductility characteristics, making it easier to machine the first groove on the pressure relief component.

In some embodiments, the aluminum alloy includes components at percentage mass contents of: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single element ≤ 0.03%. This aluminum alloy has lower hardness and better formability, which reduces the machining difficulty of the first groove, and is beneficial to improving the machining accuracy of the first groove and enhancing the pressure relief consistency of the pressure relief component.

In some embodiments, the aluminum alloy includes components at percentage mass contents of: aluminum ≥ 96.7%, 0.05% ≤ copper ≤ 0.2%, iron ≤ 0.7%, manganese ≤ 1.5%, silicon ≤ 0.6%, zinc ≤ 0.1%, components of other individual elements ≤ 0.05%, and total components of other elements ≤ 0.15%. A pressure relief component made from this aluminum alloy has higher hardness and greater strength, possessing good damage resistance capability.

In a second aspect, an embodiment of the present application provides a battery, which includes the battery cell provided in any embodiment of the first aspect.

In a third aspect, the embodiments of the present application provide an electrical device, including the battery cell provided in any embodiment of the first aspect. The battery cell is configured to supply electric energy to the electric device.

### BRIEF DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is an assembly view of the battery cell 10 shown in FIG. 3;
FIG. 5 is a partial view of a shell 1 shown in FIG. 4;
FIG. 6 is an A-A cross-sectional view of the shell 1 shown in FIG. 5;
FIG. 7 is a partially enlarged view at B in FIG. 6;
FIG. 8 is an assembly view of a battery cell provided in some other embodiments of the present application;
FIG. 9 is a partial view of the shell shown in FIG. 8;
FIG. 10 is a C-C cross-sectional view of the shell shown in FIG. 9;
FIG. 11 is a partially enlarged view at D in FIG. 10;
FIG. 12 is a partially enlarged view at E in FIG. 11;
FIG. 13 is a partial view of a shell provided in some other embodiments of the present application;
FIG. 14 is an F-F cross-sectional view of the shell shown in FIG. 13;
FIG. 15 is a partial view of the shell 1 provided in still some other embodiments of the present application;
FIG. 16 is a G-G cross-sectional view of the shell 1 shown in FIG. 15;
FIG. 17 is an exploded view of a shell provided in some embodiments of the present application (where one end of the shell body is formed with an opening, and the end cover is a pressure relief component);
FIG. 18 is an exploded view of a shell provided in some embodiments of the present application (where one end of the shell body is formed with an opening, the end cover is a first wall portion, and the pressure relief component is installed on the first wall portion);
FIG. 19 is an exploded view of a shell provided in some embodiments of the present application (where one end of the shell body is formed with an opening, the shell body includes a first wall portion, and the pressure relief component is the first wall portion);
FIG. 20 is an exploded view of a shell provided in some embodiments of the present application (where one end of the shell body is formed with an opening, the shell body includes a first wall portion, and the pressure relief component is installed on the first wall portion); and
FIG. 21 is an exploded view of a battery cell provided in some other embodiments of the present application.

Reference numerals: 1-shell; 11-shell body; 12-end cover; 13-first wall portion; 131-pressure relief hole; 14-second wall portion; 15-third wall portion; 2-electrode assembly; 21-tab; 3-electrode terminal; 4-current collecting member; 5-insulating member; 6-pressure relief component; 61-first groove; 611-groove segment; 6111-groove bottom surface of the groove segment; 611a-first groove segment; 611b-second groove segment; 611c-third groove segment; 6112-first-stage groove; 62-second groove; 621-first end; 622-second end; 623-groove bottom surface of the second groove; 63-predetermined pressure relief region; 64-first surface; 65-second surface; 10-battery cell; 20-box; 201-first portion; 202-second portion; 100-battery; 200-controller; 300-motor; 1000-vehicle; U-first connection line; X-first direction; Y-second direction; Z-third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the "plurality of" refers to more than two (including two).

In this embodiment of the present application, the battery cell may be a secondary battery, and the secondary battery refers to a battery cell that can activate an active material in a charging mode for continuous use after the battery cell is discharged.

The battery cell includes but is not limited to a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery and the like.

The battery cell generally includes an electrode assembly. The electrode assembly includes a positive electrode, a negative electrode and a spacer. During charge-discharge of the battery cell, active ions (e.g., lithium ions) are intercalated and deintercalated back and forth between the positive electrode and the negative electrode. The spacer is disposed between the positive electrode and the negative electrode, and can function to reduce a risk of short circuiting between the positive electrode and the negative electrode, while allowing active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn2O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (e.g., LiNi_{0.85}Co_{0.15}Al_{0.05}O₂)), and a modified compound thereof, etc.

In some embodiments, a foam metal may be used as the positive electrode. The foam metal may be foam nickel, foam copper, foam aluminum, foam alloy, or foam carbon, etc. When the foam metal is used as the positive electrode, the surface of the foam metal may not be provided with a positive electrode active material, and of course, may also be provided with a positive electrode active material. For example, a lithium source material, a potassium metal, or a sodium metal may also fill or/and be deposited in the foam metal, and the lithium source material is a lithium metal and/or a lithium-rich material.

In some embodiments, the negative electrode may be a negative electrode plate, and the negative electrode plate may include a negative electrode current collector.

As an example, the negative electrode current collector may be a metal foil, a foam metal, or a composite current collector. For example, as the metal foil, silver surface-treated aluminum or stainless steel, stainless steel, copper, aluminum, nickel, carbon electrode, carbon, nickel, titanium, or the like can be used. The foam metal may be foam nickel, foam copper, foam aluminum, a foam alloy, etc. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, the material of the positive electrode current collector may be aluminum, and the material of the negative electrode current collector may be copper.

In some implementations, the spacer is an separator. The separator can be any well-known porous separator with high chemical stability and mechanical stability.

As an example, the material of the separator may be selected from a group consisting of at least one of glass fiber, nonwoven fabric, polyethylene, polypropylene, and polyvinylidene fluoride. The separator may be a single-layer film or a multi-layer composite film. When the separator is the multi-layer composite film, the materials of all layers may be the same or different. The spacer can be an independent component positioned between the positive electrode and the negative electrode, and can also be attached to the surfaces of the positive electrode and the negative electrode.

In some implementations, the spacer is a solid electrolyte. The solid electrolyte is arranged between the positive electrode and the negative electrode, and plays roles in transmitting ions and isolating the positive electrode from the negative electrode.

In some implementations, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some implementations, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate and lithium tetrafluoro(oxalato)phosphate.

In some implementations, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, ethyl methyl sulfone and diethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some implementations, the electrode assembly is of a wound structure. The positive electrode plate and the negative electrode plate are wound into the wound structure.

In some implementations, the electrode assembly is of a laminated structure.

As an example, a plurality of positive electrode plates and a plurality of negative electrode plates may be provided respectively, and the plurality of positive electrode plates and the plurality of negative electrode plates are stacked alternately.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of spacers may be provided respectively between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some implementations, the electrode assembly is provided with a tab. The tab may conduct current out from the electrode assembly. The tabs include a positive tab and a negative tab.

In some implementations, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

The battery mentioned in the embodiments of the present application refers to a single physical module comprising one or more battery cells to provide higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, or an energy storage cabinet, etc.

In the development of battery technology, it is necessary to consider many design factors at the same time, such as energy density, cycle life, discharge capacity, charge-discharge rate and other performance parameters, in addition, it is also necessary to consider the safety of batteries.

For the battery cell, the main safety hazards come from charging and discharging processes, as well as appropriate ambient temperature design. In order to effectively avoid unnecessary losses, the battery cell generally has at least three protective measures. Specifically, the protective measures include at least a switching element, selection of an appropriate separator material, and a pressure relief mechanism. A switching element refers to an element that is capable of stopping charging or discharging the battery when the temperature or resistance within the battery cell reaches a certain threshold. The separator is used for separating the positive electrode plate and the negative electrode plate, and can automatically dissolve micron-scale (or even nano-scale) micropores attached thereto when the temperature rises to a certain value, so that metal ions cannot pass through the separator, thereby terminating internal reactions of the battery cell.

The pressure relief mechanism refers to an element or a component that is actuated to relieve an internal pressure or heat when the internal pressure or temperature of the battery cell reaches a predetermined threshold. The threshold design varies depending on design requirements. The threshold may depend on the material of one or more of the positive electrode plate, the negative electrode plate, the electrolyte, and the separator in the battery cell. The pressure relief mechanism may take the form of, for example, an explosion-proof valve, an explosion-proof sheet, an air valve, a pressure relief valve, or a safety valve, and may specifically employ a pressure-sensitive or temperature-sensitive element or construction. That is, when the internal pressure or temperature of the battery cell reaches a predetermined threshold, the pressure relief mechanism performs an action, or a weak structure provided in the pressure relief mechanism is broken, so as to form an opening or channel through which the internal pressure or temperature can be relieved.

The "actuate" mentioned in the present application means that the pressure relief mechanism performs an action or is activated to a certain state, so that the internal pressure and temperature of the battery cell can be relieved. The action performed by the pressure relief mechanism may include, but is not limited to: at least part of the pressure relief mechanism being broken, crushed, torn, opened, or the like. When the pressure relief mechanism is actuated, high-temperature and high-pressure substances inside the battery cell are discharged as emissions outwards from the actuated part. In this way, the pressure and temperature of the battery cell can be relieved under controllable pressure or temperature, so as to prevent potential more serious accidents.

The emissions from the battery cell mentioned in the present application include, but are not limited to: an electrolytic solution, dissolved or split positive and negative electrode plates, fragments of a separator, high-temperature and high-pressure gas generated by reaction, flames, etc.

To improve the reliability of a battery cell, a pressure relief component is generally provided in the battery cell. The pressure relief component may be part of the shell of the battery cell or a component installed on the shell. During thermal runaway of the battery cell, internal pressure of the battery cell can be released through the pressure relief component.

To achieve timely pressure relief for the battery cell, a pressure relief groove may be provided on the pressure relief component, enabling the pressure relief component to rupture along at least part of the pressure relief groove during pressure relief of the battery cell, thereby releasing pressure inside the battery cell more rapidly.

To meet the usage requirements of the battery cell, the residual thickness of the pressure relief groove can be controlled within a reasonable range to ensure that the pressure relief component possesses sufficient fatigue resistance strength during normal use of the battery cell while allowing the pressure relief component to rupture rapidly along the pressure relief groove during thermal runaway of the battery cell, thereby enabling timely pressure relief.

However, solely considering the impact of the residual thickness of the pressure relief groove on the performance of the battery cell makes it still difficult to achieve a balance between the service lifetime requirements of the battery cell during normal use and the reliability requirements of the battery cell during thermal runaway. The reason for this is that when addressing issues related to the service lifetime and reliability of the battery cell, it is necessary to consider not only the influence of the residual thickness of the pressure relief groove but also the impact of the width of the groove bottom surface of the pressure relief groove. The smaller the minimum width of the groove bottom surface of the pressure relief groove, the more likely stress concentration occurs in the pressure relief component in the region where the pressure relief groove is provided, and the smaller the strength of the pressure relief component in the region where the pressure relief groove is provided; the smaller the minimum residual thickness of the pressure relief groove, the smaller the strength of the pressure relief component in the region where the pressure relief groove is provided, and the smaller the fatigue resistance strength of the pressure relief component in the region where the pressure relief groove is provided during normal use of the battery cell. Conversely, the larger the minimum width of the groove bottom surface of the pressure relief groove, the less likely stress concentration occurs in the pressure relief component in the region where the pressure relief groove is provided, and the greater the strength of the pressure relief component in the region where the pressure relief groove is provided, and the more difficult it is for the pressure relief component to rupture along the pressure relief groove during thermal runaway of the battery cell, and the more untimely the pressure relief, and the greater the risk of explosion of the battery cell; the larger the minimum residual thickness of the pressure relief groove, the greater the strength of the pressure relief component in the region where the pressure relief groove is formed, and the more difficult it is for the pressure relief component to rupture along the pressure relief groove during thermal runaway of the battery cell, and the more untimely the pressure relief, and the greater the risk of explosion of the battery cell.

In view of this, an embodiment of the present application provides a battery cell. The battery cell includes a shell and a pressure relief component, where the shell includes a first wall portion, and the pressure relief component is disposed on the first wall portion. The pressure relief component is provided with a first groove, and the pressure relief component is configured to be capable of rupturing along at least part of the first groove when the battery cell undergoes pressure relief. The first groove includes at least one groove segment, a minimum width of a groove bottom surface of the groove segment being W, and along a thickness direction of the first wall portion, a minimum residual thickness of the groove segment being D₁, satisfying: 0.005 mm² ≤ W×D₁ ≤ 0.12 mm².

In such a battery cell, when W×D₁ ≥ 0.005 mm², a situation where the minimum width of the groove bottom surface of the groove segment is too small and the minimum residual thickness of the groove segment is too small is avoided. This reduces the risk of insufficient fatigue resistance strength in the region of the pressure relief component where the groove segment is disposed due to the minimum width of the groove bottom surface of the groove segment being too small and the minimum residual thickness of the groove segment being too small, enhancing the fatigue resistance strength in the region of the pressure relief component where the groove segment is disposed, thereby reducing the risk of the pressure relief component rupturing prematurely along the groove segment during normal use of the battery cell, and improving the service lifetime of the battery cell. When W×D₁ ≤ 0.12 mm², a situation where the minimum width of the groove bottom surface of the groove segment is too large and the minimum residual thickness of the groove segment is too large is avoided. This alleviates a situation where the strength in the region of the pressure relief component where the groove segment is disposed is too high due to the minimum width of the groove bottom surface of the groove segment being too large and the minimum residual thickness of the groove segment being too large, enabling the pressure relief component to rupture more timely along the groove segment when the battery cell undergoes thermal runaway, which improves the timeliness of pressure relief of the battery cell, and reduces the risk of explosion of the battery cell, thereby improving the reliability of the battery cell. Therefore, 0.005 mm² ≤ W×D₁ ≤ 0.12 mm², which achieves a balance between the service lifetime requirements of the battery cell during normal use and the reliability requirements of the battery cell during thermal runaway.

The battery cell in the embodiments of the present application is suitable for a battery and an electrical device using battery cells.

The electrical device may be, but not limited to, a vehicle, a mobile phone, a portable device, a laptop computer, a ship, a spacecraft, an electric toy or an electric tool, etc. The vehicle may be a fuel vehicle, a gas vehicle or a new energy vehicle. The new energy vehicle may be an all-electric vehicle, a hybrid electric vehicle, an extended range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For ease of description, in the following embodiments, the electrical device is, for example, a vehicle.

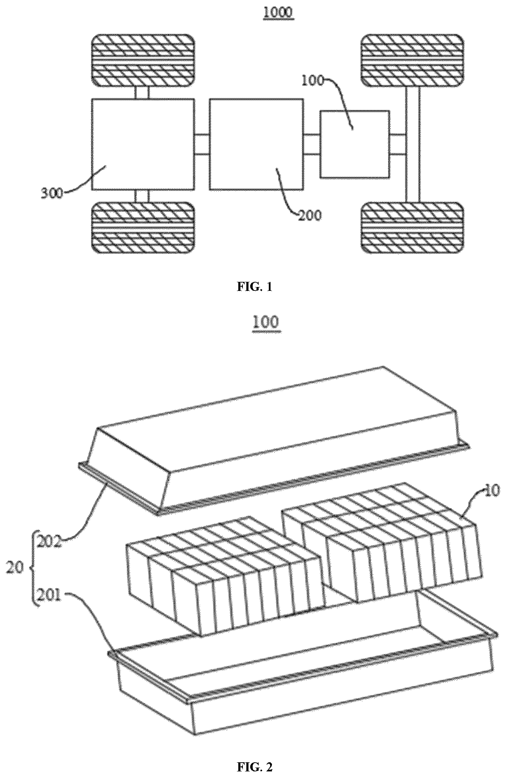

Reference is made to FIG. 1. FIG. 1 is a schematic structural diagram of a vehicle 1000 according to some embodiments of the present application. The interior of the vehicle 1000 is provided with a battery 100, and the battery 100 may be provided at the bottom or head or tail of the vehicle 1000. The battery 100 may be used as a power supply for the vehicle 1000, for example, the battery 100 may be used as an operating power source for the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some embodiments of the present application, the battery 100 not only can serve as an operating power source of the vehicle 1000, but also can serve as a driving power source of the vehicle 1000, to provide a driving power for the vehicle 1000 in place of or partially in place of fuel or natural gas.

Reference is made to FIG. 2. FIG. 2 is an exploded diagram of a battery 100 according to some embodiments of the present application. The battery 100 includes a box cell 10 and a box 20. The battery cell 10 is accommodated in the box 20.

The box 20 is a component for accommodating the battery cell 10, and the box 20 provides an accommodating space for the battery cell 10. The box 20 may be of various structures. In some embodiments, the box 20 may include a first portion 201 and a second portion 202, the first portion 201 and the second portion 202 being covered by each other to define the accommodating space for accommodating the battery cell 10. The first portion 201 and the second portion 202 may have a variety of shapes, such as a cuboid shape, a cylinder shape, etc. The first portion 201 may be of a hollow structure with one side open, the second portion 202 may also be of a hollow structure with one side open, and the open side of the second portion 202 covers the open side of the first portion 201, thereby forming the box 20 having the accommodating space. It is also possible that the first portion 201 may be of a hollow structure with one side open, the second portion 202 may be a plate-like structure, and the second portion 202 covers the open side of the first portion 201, so as to form the box 20 having the accommodating space. The first portion 201 and the second portion 202 may be sealed by means of a sealing element, which may be a sealing ring, a sealant, etc.

There may be one or more battery cells 10 in the battery 100. If there are a plurality of battery cells 10, the plurality of battery cells 10 may be connected in series, in parallel or in parallel-series connection. The parallel-series connection means that some of the plurality of battery cells 10 are connected in series and some are connected in parallel. It is possible that the plurality of battery cells 10 are connected in series or in parallel or in parallel-series connection first to form a plurality of battery modules, which may then be connected in series or in parallel or in parallel-series connection to form an entirety that is accommodated in the box 20. Alternatively, all of the battery cells 10 may be directly connected together by series connection, or parallel connection, or parallel-series connection, and then the integral whole formed by all of the battery cells 10 is accommodated within the box 20.

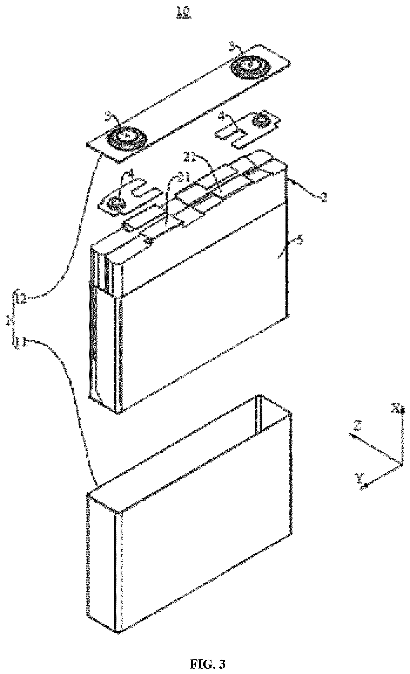

Reference is made to FIG. 3. FIG. 3 is an exploded view of a battery cell 10 provided in some embodiments of the present application. The battery cell 10 can include a shell 1 and an electrode assembly 2, and the electrode assembly 2 is accommodated in the shell 1.

In some embodiments, the shell 1 can include a shell body 11 and an end cover 12, the shell body 11 is provided with an opening, and the end cover 12 seals the opening of the shell body 11.

The shell body 11 is a component for accommodating the electrode assembly 2, the shell body 11 can be of a hollow structure with an opening formed in one end, and the shell body 11 can be of a hollow structure with openings formed in two opposite ends. The shell body 11 can be in various shapes, such as a cylinder shape, and a cuboid shape. The shell body 11 can be made of various materials, such as copper, iron, aluminum, steel, and aluminum alloy.

The end cover 12 is a component that closes the opening of the shell body 11 to isolate an internal environment of the battery cell 10 from an external environment. The end cover 12 and the shell body 11 jointly define an accommodating space for accommodating the electrode assembly 2, an electrolyte solution and other components. The end cover 12 can be connected to the shell body 11 in a welding or rolling sealing manner so as to seal the opening of the shell body 11. The shape of the end cover 12 can be matched with the shape of the shell 1, for example, if the shell body 11 is of a cuboid structure, the end cover 12 will be of a rectangular plate-shaped structure matched with the shell 1, for another example, if the shell body 11 is of a cylinder structure, and the end cover 12 will be of a circular plate-shaped structure matched with the shell body 11. The end cover 12 may also be made of various materials, such as copper, iron, aluminum, steel, aluminum alloy, and plastic. The material of the end cover 12 and the material of the shell body 11 may be the same or different.

In the embodiment where the shell body 11 has the opening formed in one end, one end cover 12 can be correspondingly provided. In an embodiment that the shell body 11 is provided with openings in two opposite ends, two end covers 12 can be correspondingly arranged, the two end covers 12 seal the two openings of the shell body 11 respectively, and the two end covers 12 and the shell body 11 jointly define the accommodating space.

In some embodiments, the battery cell 10 may further include an electrode terminal 3, where the electrode terminal 3 is arranged on the shell 1, and the electrode terminal 3 is used for electrical connection with a tab 21 of the electrode assembly 2, so as to output electric energy of the battery cell 10. The electrode terminal 3 can be arranged on the shell body 11 of the shell 1, or arranged on the end cover 12 of the shell 1. The electrode terminal 3 can be directly connected to the tab 21, for example, the electrode terminal 3 is directly welded with the tab 21. The electrode terminal 3 can also be indirectly connected to the tab 21, for example, the electrode terminal 3 is indirectly connected to the tab 21 by means of a current collecting member 4. The current collecting member 4 can be a metal conductor, such as copper, iron, aluminum, steel, and aluminum alloy.

As an example, as shown in FIG. 3, if the opening is formed in one end of the shell body 11, one end cover 12 is arranged in the shell 1, and one end cover 12 seals one opening of the shell body 11. Two electrode terminals 3 are arranged on the end cover 12, and the two electrode terminals 3 are respectively a positive electrode terminal and a negative electrode terminal; a positive tab and a negative tab are formed at one end of the electrode assembly 2 facing the end cover 12; and the positive electrode terminal is connected to the positive tab by means of one current collecting member 4, and the negative electrode terminal is electrically connected to the negative tab by means of the other current collecting member 4.

In some embodiments, with reference to FIG. 3, the battery cell 10 can further include an insulating member 5, the insulating member 5 is a component for isolating the shell body 11 from the electrode assembly 2, and the insulating isolation of the shell body 11 and the electrode assembly 2 is realized by the insulating member 5. The insulating member 5 is made of an insulating material, and the materials of the insulating member 5 include but are not limited to plastic, rubber and the like.

As an example, the insulating member 5 coats the outer side of the electrode assembly 2 in the circumferential direction of the opening of the shell body 11. One or a plurality of electrode assemblies 2 may arranged in the shell 1. If there is one electrode assembly 2, the insulating member 5 is coated around the electrode assembly 2; and if there are a plurality of electrode assemblies 2, one insulating member 5 may be disposed in correspondence with one electrode assembly 2, each insulating member 5 is coated around one electrode assembly 2, or the plurality of electrode assemblies 2 may be used as an integral component, and the insulating member 5 is coated around the integral component.

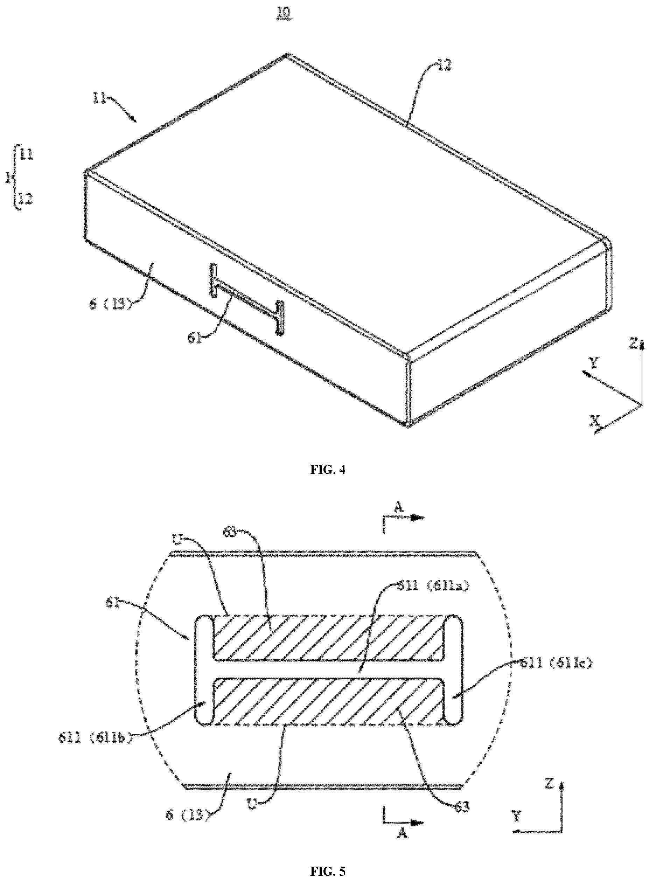

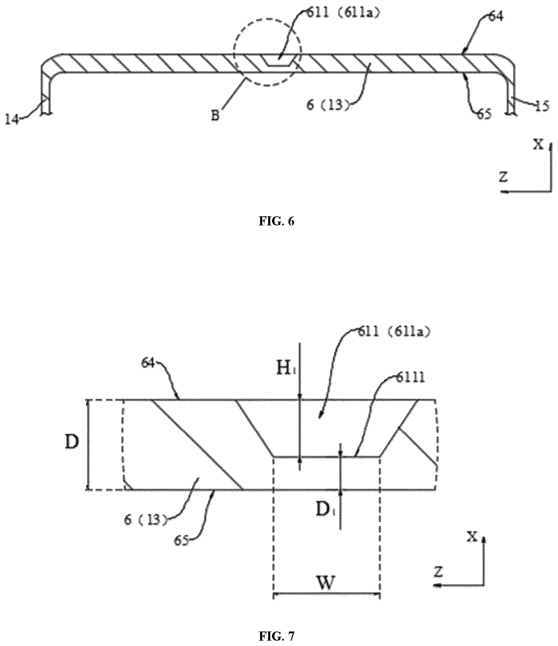

Reference is made to FIG. 4 - FIG. 7. FIG. 4 is an assembly view of the battery cell 10 shown in FIG. 3; FIG. 5 is a partial view of a shell 1 shown in FIG. 4; FIG. 6 is an A-A cross-sectional view of the shell 1 shown in FIG. 5; and FIG. 7 is a partially enlarged view at B in FIG. 6. An embodiment of the present application provides a battery cell 10, including a shell 1 and a pressure relief component 6, where the shell 1 includes a first wall portion 13, and the pressure relief component 6 is disposed on the first wall portion 13. The pressure relief component 6 is provided with a first groove 61, and the pressure relief component 6 is configured to be capable of rupturing along at least part of the first groove 61 when the battery cell 10 undergoes pressure relief, where the first groove 61 includes at least one groove segment 611, a minimum width of a groove bottom surface 6111 of the groove segment being W, and along a thickness direction of the first wall portion 13, a minimum residual thickness of the groove segment 611 being D₁, satisfying: 0.005 mm² ≤ W×D₁ ≤ 0.12 mm².

The shell 1 may include a plurality of wall portions. The plurality of wall portions collectively define an accommodating space inside the shell 1 to accommodate the battery cell 10, electrolyte solution, and other components. The other components may include a current collecting member 4, an insulating member 5, and other components. Among the plurality of wall portions of the shell 1, one wall portion may be the first wall portion 13, or the plurality of wall portions may all be the first wall portions 13. Taking the shell 1 having a cuboid shape as an example, there are six wall portions in the shell 1. One, two, three, four, five, or six wall portions may be the first wall portion 13. In the shell 1, at least one end cover 12 may be the first wall portion 13, or at least one wall portion in the shell body 11 may be the first wall portion 13.

The pressure relief component 6 is a component in the battery cell 10 that is used to release pressure inside the battery cell 10. The pressure relief component 6 is disposed on the first wall portion 13. The pressure relief component 6 may be integrally formed with the first wall portion 13, or the pressure relief component 6 may be separately formed from the first wall portion 13, and the pressure relief component 6 may be installed on the first wall portion 13. If the pressure relief component 6 is integrally formed with the first wall portion 13, the pressure relief component 6 constitutes at least part of the first wall portion 13. That is, the entirety of the first wall portion 13 may serve as the pressure relief component 6, or a portion of the first wall portion 13 may serve as the pressure relief component 6.

The first groove 61 is a pressure relief groove provided in the pressure relief component 6. When the pressure inside the battery cell 10 reaches the burst pressure of the pressure relief component 6, the pressure relief component 6 can rupture along at least part of the first groove 61 to release the pressure inside the battery cell 10. It can be understood that during pressure relief of the battery cell 10, the pressure relief component 6 may rupture along the entirety of the first groove 61 or along a portion of the first groove 61 to release the pressure inside the battery cell 10. The first groove 61 may be formed by various methods, such as forming through stamping or milling. The number of groove segments 611 in the first groove 61 may be one, or may be a plurality. The groove segment 611 may extend along a linear or arc-shaped trajectory. The shape of the cross section of the groove segment 611 may be various, such as rectangular or trapezoidal. The cross section of the groove segment 611 is perpendicular to the extension direction of the groove segment 611. The shape of the first groove 61 may be various. For example, the first groove 61 is a groove extending along a linear or arc-shaped trajectory, and the number of groove segments 611 in the first groove 61 may be one. As another example, the first groove 61 includes a plurality of groove segments 611, where the plurality of groove segments 611 may form a U-shape, an H-shape, a V-shape, a Y-shape, an X-shape, or other shapes.

The minimum width of the groove bottom surface 6111 of the groove segment is the minimum dimension of the groove bottom surface 6111 of the groove segment along the width direction of the groove segment 611. Taking the groove bottom surface 6111 of the groove segment having two opposite edge lines along the width direction of the groove segment 611 as an example, the minimum distance between the two edge lines along the width direction of the groove segment 611 is the minimum width of the groove bottom surface 6111 of the groove segment. The two edge lines are respectively formed at positions where the groove bottom surface 6111 of the groove segment is connected with two opposing groove side surfaces of the groove segment 611. The groove bottom surface 6111 of the groove segment may be directly connected with the groove side surfaces, forming a sharp corner at the connection region; alternatively, the groove bottom surface 6111 of the groove segment may be indirectly connected with the groove side surfaces via arc-shaped surfaces to form a rounded corner at the connection region. The minimum residual thickness of the groove segment 611 is the minimum thickness of the residual portion of the pressure relief component 6 after forming the groove segment 611. This residual portion may be the groove bottom wall of the groove segment 611, and this residual portion may also be referred to as a weak portion. The thickness of the groove bottom wall of the groove segment 611 may be uniform, or may be non-uniform. If the thickness of the groove bottom wall of the groove segment 611 is non-uniform, the thickness at the thinnest position of the groove bottom wall of the groove segment 611 is the minimum residual thickness of the groove segment 611.

W×D₁ is the area of the minimum cross section of the weak portion. This cross section is perpendicular to the extension direction of the groove segment 611. W×D₁ may take any single point value among 0.005 mm², 0.008 mm², 0.01 mm², 0.02 mm², 0.05 mm², 0.08 mm², 0.09 mm², 0.1 mm², 0.11 mm², 0.12mm², etc., or any range value between any two of these values.

When measuring the minimum width W of the groove bottom surface 6111 of the groove segment and the minimum residual thickness D₁ of the groove segment 611, the pressure relief component 6 may be cut open along a direction perpendicular to the groove segment 611, and W and D₁ may be measured on the cut surface. It should be noted that along the extension direction of the groove segment 611, if the end portion of the groove segment 611 has a rounded corner, W is the minimum width of the groove bottom surface 6111 of the groove segment in the non-rounded corner region of the groove segment 611. That is, W is measured on the groove bottom surface 6111 of the groove segment in regions other than the rounded corner region of the groove segment 611. Along the extension direction of the groove segment 611, if the end portion of the groove segment 611 has a chamfer, W is the minimum width of the groove bottom surface 6111 of the groove segment in the non-chamfered region of the groove segment 611. That is, W is measured on the groove bottom surface 6111 of the groove segment in regions other than the chamfered region of the groove segment 611.

As an example, in the embodiment shown in FIG. 4 - FIG. 7, the shell 1 has a cuboid shape, where the thickness direction of the first wall portion 13 is parallel to the first direction X, the length direction of the first wall portion 13 is parallel to the second direction Y, and the width direction of the first wall portion 13 is parallel to the third direction Z.

In the embodiments of the present application, the pressure relief component 6 is provided with the first groove 61, enabling the pressure relief component 6 to rupture along at least part of the first groove 61 when the battery cell 10 undergoes pressure relief, so as to release internal pressure of the battery cell 10. When W×D₁ ≥ 0.005 mm², a situation where the minimum width of the groove bottom surface 6111 of the groove segment is too small and the minimum residual thickness of the groove segment 611 is too small is avoided. This reduces the risk of insufficient fatigue resistance strength in the region of the pressure relief component 6 where the groove segment 611 is disposed due to the minimum width of the groove bottom surface 6111 of the groove segment being too small and the minimum residual thickness of the groove segment 611 being too small, enhancing the fatigue resistance strength in the region of the pressure relief component 6 where the groove segment 611 is disposed, and reducing the risk of the pressure relief component 6 rupturing prematurely along the groove segment 611 during normal use of the battery cell 10, thereby improving the service lifetime of the battery cell 10. When W×D₁ ≤ 0.12 mm², a situation where the minimum width of the groove bottom surface 6111 of the groove segment is too large and the minimum residual thickness of the groove segment 611 is too large is avoided. This alleviates a situation where the strength in the region of the pressure relief component 6 where the groove segment 611 is disposed is too high due to the minimum width of the groove bottom surface 6111 of the groove segment being too large and the minimum residual thickness of the groove segment 611 being too large, enabling the pressure relief component 6 to rupture more timely along the groove segment 611 when the battery cell 10 undergoes thermal runaway, which improves the timeliness of pressure relief of the battery cell 10, and reduces the risk of explosion of the battery cell 10, thereby improving the reliability of the battery cell 10. Therefore, 0.005 mm² ≤ W×D₁ ≤ 0.12 mm², which achieves a balance between the service lifetime requirements of the battery cell 10 during normal use and the reliability requirements of the battery cell 10 during thermal runaway.

In some embodiments, 0.01 mm² ≤ W×D₁ ≤ 0.05 mm².

W×D₁ may take any single point value among 0.01 mm², 0.012 mm², 0.015 mm², 0.018 mm², 0.02 mm², 0.022 mm², 0.025 mm², 0.028 mm², 0.03 mm², 0.032 mm², 0.035 mm², 0.038 mm², 0.04 mm², 0.042 mm², 0.045 mm², 0.048 mm², 0.05 mm², etc., or any range value between any two of these values.

In this embodiment, when W×D₁ ≥ 0.01 mm², the fatigue resistance strength in the region of the pressure relief component 6 where the groove segment 611 is disposed is further enhanced, which further reduces the risk of the pressure relief component 6 rupturing prematurely along the groove segment 611 during normal use of the battery cell 10, and further improves the service lifetime of the battery cell 10; and when W×D₁ ≤ 0.05 mm², the pressure relief component 6 is enabled to rupture more timely along the groove segment 611 when the battery cell 10 undergoes thermal runaway, which further improves the timeliness of pressure relief of the battery cell 10, and further reduces the risk of explosion of the battery cell 10.

In some embodiments, 0.05 mm ≤ W ≤ 0.5 mm.

W may take any single point value among 0.05 mm, 0.1 mm, 0.15 mm, 0.2 mm, 0.25 mm, 0.3 mm, 0.35 mm, 0.4 mm, 0.45 mm, and 0.5 mm, or any range value between any two of these values.

In this embodiment, when W ≥ 0.05 mm, the minimum width of the groove bottom surface 6111 of the groove segment is prevented from being excessively small, thereby reducing the difficulty in forming the groove segment 611; and when W ≤ 0.5 mm, the minimum width of the groove bottom surface 6111 of the groove segment is prevented from being excessively large, and the minimum residual thickness of the groove segment 611 is prevented from being excessively small, which, on the one hand, reduces the risk of the pressure relief component 6 rupturing along the groove segment 611 during formation of the groove segment 611, thereby improving the forming yield of the pressure relief component 6, and on the other hand, eliminates the need to machine the groove bottom surface 6111 of the groove segment excessively wide, thereby reducing the forming force applied to the pressure relief component 6 during formation of the groove segment 611.

In some embodiments, 0.1 mm ≤ W ≤ 0.3 mm.

W may take any single point value among 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28 mm, 0.29 mm, and 0.3 mm, or any range value between any two of these values.

In this embodiment, 0.1 mm ≤ W ≤ 0.3 mm. This can further reduce the difficulty in forming the groove segment 611, and further reduce the risk of the pressure relief component 6 rupturing along the groove segment 611 during formation of the groove segment 611.

In some embodiments, 0.05 mm ≤ D₁ ≤ 0.6 mm.

D₁ may take any single point value among 0.05 mm, 0.1 mm, 0.15 mm, 0.2 mm, 0.25 mm, 0.3 mm, 0.35 mm, 0.4 mm, 0.45 mm, 0.5 mm, 0.55 mm, and 0.6 mm, or any range value between any two of these values.

In this embodiment, when D₁ ≥ 0.05 mm, the minimum residual thickness of the groove segment 611 is prevented from being excessively small, which, on the one hand, reduces the risk of the pressure relief component 6 rupturing along the groove segment 611 during formation of the groove segment 611, thereby improving the forming yield of the pressure relief component 6, and on the other hand, eliminates the need to machine the groove bottom surface 6111 of the groove segment excessively wide, thereby reducing the forming force applied to the pressure relief component 6 during formation of the groove segment 611. When D₁ ≤ 0.6 mm, the minimum residual thickness of the groove segment 611 is prevented from being excessively large, eliminating the need to machine the groove bottom surface 6111 of the groove segment excessively narrow, thereby reducing the difficulty in forming the groove segment 611.

In some embodiments, 0.08 mm ≤ D₁ ≤ 0.4 mm.

D₁ may take any single point value among 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, 0.25 mm, 0.26 mm, 0.27 mm, 0.28 mm, 0.29 mm, 0.3 mm, 0.31 mm, 0.32 mm, 0.33 mm, 0.34 mm, 0.35 mm, 0.36 mm, 0.37 mm, 0.38 mm, 0.39 mm, and 0.4 mm, or any range value between any two of these values.

In this embodiment, this can further reduce the risk of the pressure relief component 6 rupturing along the groove segment 611 during formation of the groove segment 611, and further reduce the difficulty in forming the groove segment 611.

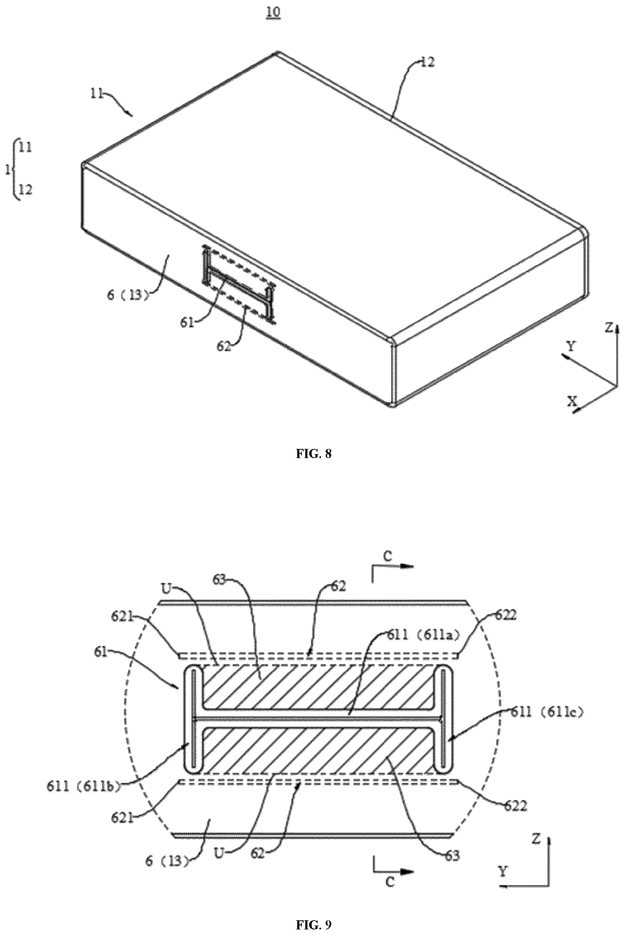

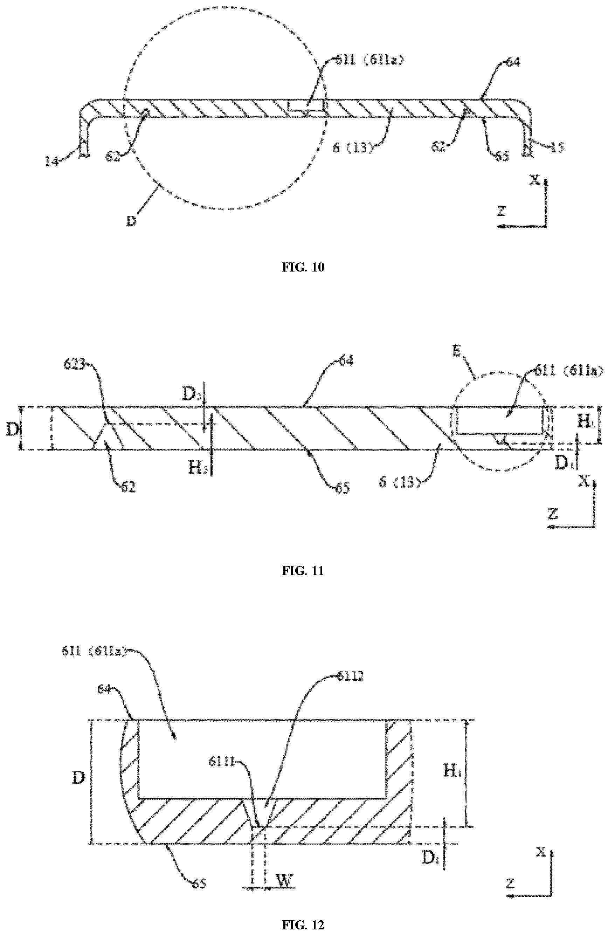

In some embodiments, reference is made to FIG. 8 - FIG. 11. FIG. 8 is an assembly view of a battery cell 10 provided in some other embodiments of the present application; FIG. 9 is a partial view of the shell 1 shown in FIG. 8; FIG. 10 is a C-C cross-sectional view of the shell 1 shown in FIG. 9; and FIG. 11 is a partially enlarged view at D in FIG. 10. The first groove 61 defines at least one predetermined pressure relief region 63, and the pressure relief component 6 is provided with a second groove 62, the second groove 62 being configured to guide at least part of the predetermined pressure relief region 63 to flip, so as to open at least part of the predetermined pressure relief region 63.

The second groove 62 is a flipping groove provided in the pressure relief component 6. When the pressure relief component 6 ruptures along at least part of the first groove 61, the second groove 62 can guide at least part of the predetermined pressure relief region 63 to flip. That is, the second groove 62 functions to assist the predetermined pressure relief region 63 in flipping, making it easier for the predetermined pressure relief region 63 to flip outward relative to the battery cell 10, thereby rapidly opening the predetermined pressure relief region 63. The second groove 62 may guide the entirety of the predetermined pressure relief region 63 to flip, or the second groove 62 may guide only a portion of the predetermined pressure relief region 63 to flip. During pressure relief of the battery cell 10, the pressure relief component 6 can rupture along at least part of the first groove 61 and generally does not rupture along the second groove 62. The minimum thickness of the residual portion in the region of the pressure relief component 6 where the first groove 61 is disposed may be smaller than the minimum thickness of the residual portion in the region of the pressure relief component 6 where the second groove 62 is disposed. This makes the region of the pressure relief component 6 where the first groove 61 is formed more prone to rupture compared to the region of the pressure relief component 6 where the second groove 62 is formed. The second groove 62 may be formed by various methods, such as forming through stamping or milling. The shape of the second groove 62 may be various. For example, the second groove 62 is a groove extending along an arc-shaped trajectory. As another example, the second groove 62 is a groove extending along a linear trajectory. The shape of the cross section of the second groove 62 may be various, such as rectangular or trapezoidal.

The second groove 62 not only functions to assist the flipping of the predetermined pressure relief region 63 but also may have a buffering function. The second groove 62 can absorb excess material extruded during the formation of the first groove 61. This reduces the risk of the extruded excess material from the first groove 61 spreading toward the surface of the shell 1 along the width direction of the second groove 62, thereby improving the flatness of the surface of the shell 1 along the width direction of the second groove 62. When the shell 1 of the battery cell 10 is subjected to internal and external impact forces along the width direction of the second groove 62 and deforms, the second groove 62 can additionally absorb deformation energy of the shell 1, reducing the impact of expansion deformation of the battery cell 10 along the width direction of the second groove 62 on the pressure relief component 6.

The second groove 62 and the first groove 61 may be directly connected, or the second groove 62 and the first groove 61 may not contact each other. The second groove 62 and the first groove 61 may be disposed on the same surface of the pressure relief component 6 along the thickness direction of the first wall portion 13, or the second groove 62 and the first groove 61 may be respectively disposed on two opposite surfaces of the pressure relief component 6 along the thickness direction of the first wall portion 13. If the second groove 62 and the first groove 61 are directly connected, the second groove 62 and the first groove 61 may be disposed on the same surface of the pressure relief component 6. If the second groove 62 and the first groove 61 do not contact each other, the projection of the second groove 62 and the projection of the first groove 61 along the thickness direction of the first wall portion 13 may partially overlap or may not overlap.

The predetermined pressure relief region 63 is a region of the pressure relief component 6 defined by the first groove 61, and the number of predetermined pressure relief regions 63 defined by the first groove 61 may be one, or may be a plurality. The predetermined pressure relief region 63 can open when the pressure relief component 6 ruptures along the first groove 61. The predetermined pressure relief region 63 may be in one-to-one correspondence with the second groove 62. That is, each predetermined pressure relief region 63 is disposed in correspondence with one second groove 62. Alternatively, each predetermined pressure relief region 63 may be disposed in correspondence with a plurality of second grooves 62. The predetermined pressure relief region 63 may be triangular, rectangular, trapezoidal, semicircular, or other shapes. In this embodiment, the shape of the first groove 61 may be various. For example, the first groove 61 is a groove extending along an arc-shaped trajectory. As another example, the first groove 61 includes a plurality of groove segments 611, where the plurality of groove segments 611 may form a U-shape, H-shape, V-shape, Y-shape, X-shape, or other shapes. In the embodiment shown in FIG. 9, the first groove 61 has an H-shaped structure, the predetermined pressure relief region 63 is two in number, the predetermined pressure relief region 63 is substantially in a rectangular structure, and the two shaded portions shown in FIG. 9 are the two predetermined pressure relief regions 63.

The second groove 62 provides an auxiliary flipping function for the predetermined pressure relief region 63, which makes flipping of the predetermined pressure relief region 63 easier, and reduces the flipping difficulty of the predetermined pressure relief region 63, enabling the predetermined pressure relief region 63 to open more rapidly during the process of the pressure relief component 6 rupturing along the first groove 61, thereby improving the opening rate of the predetermined pressure relief region 63.

In some embodiments, with continued reference to FIG. 11, a minimum residual thickness of the second groove 62 is D₂, satisfying: D₁ ≤ D₂.

The minimum residual thickness of the second groove 62 is the minimum thickness of the residual portion of the pressure relief component 6 after forming the second groove 62, and this residual portion may be the groove bottom wall of the second groove 62. The thickness of the groove bottom wall of the second groove 62 may be uniform, or may be non-uniform. If the thickness of the groove bottom wall of the second groove 62 is non-uniform, the thickness at the thinnest position of the groove bottom wall of the second groove 62 is the minimum residual thickness of the second groove 62.

In this embodiment, D₁ < D₂. This causes the strength in the region of the pressure relief component 6 where the groove segment 611 is disposed to be less than the strength in the region of the pressure relief component 6 where the second groove 62 is disposed, enabling the pressure relief component 6 to rupture preferentially along the first groove 61, so as to achieve rapid opening of the predetermined pressure relief region 63.

In some embodiments, with continued reference to FIG. 11, along the thickness direction of the first wall portion 13, a maximum groove depth of the groove segment 611 is H₁, and a maximum groove depth of the second groove 62 is H₂, satisfying: H₂ ≤ H₁.

The maximum distance between the groove opening of the groove segment 611 and the groove bottom surface 6111 of the groove segment along the thickness direction of the first wall portion 13 is the maximum groove depth of the first groove 61; and the maximum distance between the groove opening of the second groove 62 and the groove bottom surface 623 of the second groove along the thickness direction of the first wall portion 13 is the maximum groove depth of the second groove 62. Along the thickness direction of the first wall portion 13, the pressure relief component 6 may have a first surface 64 and a second surface 65 that are opposite to each other. The first groove 61 may be disposed on one of the first surface 64 and the second surface 65, and the second groove 62 may be disposed on the other of the first surface 64 and the second surface 65. Alternatively, the first groove 61 and the second groove 62 may both be disposed on the first surface 64 or on the second surface 65.

As an example, the first surface 64 is parallel to the second surface 65, where the distance between the first surface 64 and the second surface 65 is D, and the thickness of the pressure relief component 6 is D, satisfying: D = D₁ + H₁ = D₂ + H₂.

In this embodiment, by configuring a structure in which the maximum depth of the groove segment 611 is greater than the maximum depth of the second groove 62, it is beneficial to enable the minimum residual thickness of the groove segment 611 to be less than the minimum residual thickness of the second groove 62. During the production process, the depth of the groove segment 611 can be machined deeper compared to the depth of the second groove 62, thereby enabling the minimum residual thickness of the groove segment 611 to be less than the minimum residual thickness of the second groove 62.

In some embodiments, along the thickness direction of the first wall portion 13, the maximum groove depth of the groove segment 611 is H₁, and the thickness of the pressure relief component 6 is D, where 0.16 ≤ H₁/D < 1.

H₁/D may take any single point value among 0.16, 0.18, 0.2, 0.22, 0.25, 0.28, 0.3, 0.32, 0.35, 0.38, 0.4, 0.42, 0.45, 0.48, 0.5, 0.62, 0.65, 0.68, 0.7, 0.72, 0.75, 0.78, 0.8, 0.82, 0.85, 0.88, 0.9, 0.92, 0.95, 0.98, 0.99, etc., or any range value between any two of these values.

It can be understood that if the pressure relief component 6 is integrally formed with the first wall portion 13, the first wall portion 13 may serve as the pressure relief component 6, and the thickness of the pressure relief component 6 is the thickness of the first wall portion 13.

In this embodiment, 0.16 ≤ H₁/D < 1, which prevents the proportion of the maximum groove depth of the groove segment 611 in the thickness of the pressure relief component 6 from being too small, and prevents the burst pressure of the battery cell 10 from being excessively high, thereby facilitating improvement of the timeliness of pressure relief for the battery cell 10.

In some embodiments, 0.4 mm ≤ H₁ ≤ 2 mm, and 0.8 mm ≤ D ≤ 2.5 mm.

H₁ may take any single point value among 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, etc., or any range value between any two of these values.

D may take any single point value among 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.45 mm, 1.5 mm, 1.55 mm, 1.6 mm, 1.65 mm, 1.7 mm, 1.75 mm, 1.8 mm, 1.85 mm, 1.9 mm, 1.95 mm, 2 mm, 2.05 mm, 2.1 mm, 2.15 mm, 2.2 mm, 2.25 mm, 2.3 mm, 2.35 mm, 2.4 mm, 2.45 mm, 2.5 mm, etc., or any range value between any two of these values.

In some embodiments, with continued reference to FIG. 9, the pressure relief component 6 is provided with a plurality of second grooves 62, and the first groove 61 defines a plurality of predetermined pressure relief regions 63, each of the predetermined pressure relief regions 63 being disposed in correspondence with at least one second groove 62.

The number of second grooves 62 may be two, three, four, or more, and the number of predetermined pressure relief regions 63 defined by the first groove 61 may be two, three, four, or more. Each predetermined pressure relief region 63 may be disposed in correspondence with at least one second groove 62. That is, each predetermined pressure relief region 63 may be disposed in correspondence with one second groove 62, or may be disposed in correspondence with a plurality of second grooves 62.

In this embodiment, the first groove 61 defines a plurality of predetermined pressure relief regions 63. When the battery cell 10 undergoes thermal runaway, the plurality of predetermined pressure relief regions 63 can all open, and given a certain total pressure relief area of the pressure relief component 6, the opening rate of the predetermined pressure relief regions 63 can be increased, thereby achieving pressure relief more rapidly.

In some embodiments, with continued reference to FIG. 9, the first groove 61 includes a plurality of groove segments 611. The plurality of groove segments 611 define two predetermined pressure relief regions 63. The plurality of groove segments 611 include a first groove segment 611a. Along a width direction of the second groove 62, the first groove segment 611a and the second groove 62 are disposed at intervals. The two predetermined pressure relief regions 63 are positioned on the two sides of the first groove segment 611a, respectively.

The number of first grooves 61 may be two, three, four, or more. The first groove segment 611a may be one groove segment 611 among the plurality of groove segments 611. The first groove segment 611a is a groove segment 611 in the first groove 61 that separates the two predetermined pressure relief regions 63. The areas of the two predetermined pressure relief regions 63 may be equal, or may be unequal. The first groove segment 611a and the second groove 62 are arranged along the width direction of the second groove 62. The second groove 62 and the first groove segment 611a may be parallel, or the extension line of the second groove 62 may intersect with the extension line of the first groove segment 611a.

As an example, in the embodiment shown in FIG. 9, a width direction of the second groove 62 is parallel to the third direction Z. The number of groove segments 611 in the first groove 61 is three. The three groove segments 611 form an H-shaped structure. Both the first groove segment 611a and the second groove 62 extend along linear trajectories. The first groove segment 611a is parallel to the second groove 62. The second groove 62 is in one-to-one correspondence with the predetermined pressure relief region 63. The distances from the two second grooves 62 to the first groove segment 611a are equal. The two predetermined pressure relief regions 63 are symmetrically disposed on the two sides of the first groove segment 611a, such that the areas of the two predetermined pressure relief regions 63 are equal.

In this embodiment, the plurality of groove segments 611 of the first groove 61 define two predetermined pressure relief regions 63, causing the first groove segment 611a of the first groove 61 to be located between two predetermined pressure relief regions 63, such that after the pressure relief component 6 ruptures along the first groove segment 611a, the two predetermined pressure relief regions 63 can open symmetrically in a split manner for pressure relief when the battery cell 10 undergoes pressure relief, enabling the two predetermined pressure relief regions 63 to open rapidly, which is beneficial to improving the pressure relief rate of the battery cell 10.

In some embodiments, with continued reference to FIG. 9 - FIG. 11, along a thickness direction of the first wall portion 13, a projection of the second groove 62 and a projection of the first groove 61 do not overlap.

Along the thickness direction of the first wall portion 13, a projection of an extension line of the second groove 62 may be connected with a projection of the first groove 61, or a projection of an extension line of the first groove 61 may be connected with a projection of the second groove 62, or a projection of an extension line of the first groove 61 may be connected with a projection of an extension line of the second groove 62. The second groove 62 and the first groove 61 may be disposed on the same side of the pressure relief component 6 along the thickness direction of the first wall portion 13. For example, the second groove 62 and the first groove 61 are both disposed on the first surface 64 or the second surface 65 of the pressure relief component 6. Alternatively, the second groove 62 and the first groove 61 may be disposed on different sides of the pressure relief component 6 along the thickness direction of the first wall portion 13. For example, the first groove 61 is disposed on one of the first surface 64 and the second surface 65 of the pressure relief component 6, and the second groove 62 is disposed on the other.

\In this embodiment, the projection of the second groove 62 along the thickness direction of the first wall portion 13 does not overlap with the projection of the first groove 61 along the thickness direction of the first wall portion 13, which can reduce mutual influence between the first groove 61 and the second groove 62 during machining, thereby lowering the risk of the first groove 61 and the second groove 62 communicating with each other during machining.

In some embodiments, with continued reference to FIG. 9 - FIG. 11, along the width direction of the second groove 62, the second groove 62 and the first groove 61 are disposed at intervals.

The second groove 62 and the first groove 61 are disposed at intervals along the width direction of the second groove 62. That is, the projection of the second groove 62 along the thickness direction of the first wall portion 13 and the projection of the first groove 61 along the thickness direction of the first wall portion 13 are separated by a certain distance along the width direction of the second groove 62. In this embodiment, the second groove 62 and the first groove 61 may be located on the same side of the pressure relief component 6 along the thickness direction of the first wall portion 13, or on two opposite sides of the pressure relief component 6 along the thickness direction of the first wall portion 13. It can be understood that the projection of the second groove 62 along the thickness direction of the first wall portion 13 and the projection of the first groove 61 along the thickness direction of the first wall portion 13 are disposed at intervals along the width direction of the second groove 62.

As an example, in the embodiment shown in FIG. 10, the shell 1 further includes a second wall portion 14 and a third wall portion 15. Along the width direction of the second groove 62, the second wall portion 14 and the third wall portion 15 are oppositely disposed. The first wall portion 13 connects the first wall portion 13 and the third wall portion 15. The first wall portion 13 serves as the pressure relief component 6. The first wall portion 13 is provided with two second grooves 62. Along the width direction of the second groove 62, one second groove 62 is located between the first groove 61 and the second wall portion 14, and the other second groove 62 is located between the first groove 61 and the third wall portion 15.

In this embodiment, the second groove 62 and the first groove 61 are disposed at intervals along the width direction of the second groove 62. This can achieve the effect that the projection of the second groove 62 along the thickness direction of the first wall portion 13 and the projection of the first groove 61 along the thickness direction of the first wall portion 13 do not overlap, which, on the one hand, can reduce mutual influence between the first groove 61 and the second groove 62 during machining, and on the other hand, can reduce influence of residual stress between the region of the pressure relief component 6 where the first groove 61 is disposed and the region of the pressure relief component 6 where the second groove 62 is disposed, and can reduce the risk of ruptures generated by the pressure relief component 6 rupturing along the first groove 61 propagating to the second groove 62 and thus causing the pressure relief component 6 to rupture along the second groove 62.

In the above embodiment, the second groove 62 and the first groove 61 are disposed at intervals along the width direction of the second groove 62, such that the projection of the first groove 61 along the thickness direction of the first wall portion 13 is not located within the predetermined pressure relief region 63. In other embodiments, a portion or the entirety of the projection of the first groove 61 along the thickness direction of the first wall portion 13 may be located within the predetermined pressure relief region 63.

In some embodiments, with continued reference to FIG. 9, along the thickness direction of the first wall portion 13, the two ends of a projection of the second groove 62 along an extension direction respectively extend beyond the two end portions of a projection of the first groove 61.

Along the thickness direction of the first wall portion 13, the projection of the second groove 62 has two opposite ends along the extension direction: a first end 621 and a second end 622. The two ends of the projection of the second groove 62 along the extension direction extend beyond the two end portions of the projection of the first groove 61. That is, the two end portions of the projection of the first groove 61 are located between the first end 621 and the second end 622 along the extension direction of the projection of the second groove 62. The extension direction of the projection of the second groove 62 along the thickness direction of the first wall portion 13 is parallel to the extension direction of the second groove 62. As an example, along the extension direction of the second groove 62, a length of the second groove 62 is greater than a length of the first groove 61 (a maximum span of the first groove 61 along the extension direction of the second groove 62).

As an example, in the embodiment shown in FIG. 9, the extension direction of the second groove 62 is parallel to the second direction Y.

In this embodiment, the two ends of the projection of the second groove 62 along the thickness direction of the first wall portion 13 extend beyond the two end portions of the projection of the first groove 61 along the thickness direction of the first wall portion 13, respectively, which makes the second groove 62 longer, thereby enhancing the auxiliary flipping effect of the second groove 62 on the predetermined pressure relief region 63. Furthermore, this structure can also improve the separation effect of the second groove 62 between the surfaces of the battery cell 10 in the width direction of the second groove 62 (an outer surface of the second wall portion 14 or an outer surface of the third wall portion 15) and the first groove 61. It improves the absorption effect of the second groove 62 on the extruded excess material generated during formation of the first groove 61, enhances the flatness of surfaces of the battery cell 10 along the width direction of the second groove 62, and enables improvement of the blocking effect of the second groove 62 on deformation energy of the battery cell 10 when the battery cell 10 is subjected to internal and external impact forces, thereby reducing the impact of expansion of the battery cell 10 on the pressure relief component 6.

In other embodiments, along the thickness direction of the first wall portion 13, the projection of the second groove 62 may be located between the two end portions of the projection of the first groove 61.

In some embodiments, with continued reference to FIG. 10 and FIG. 11, along the thickness direction of the first wall portion 13, the pressure relief component 6 has a first surface 64 and a second surface 65 that are oppositely disposed. The first groove 61 is provided on the first surface 64, and the second groove 62 is provided on the second surface 65.

One of the first surface 64 and the second surface 65 may be an outer surface of the pressure relief component 6, and the other may be an inner surface of the pressure relief component 6. The outer surface of the pressure relief component 6 faces an exterior of the battery cell 10, and the inner surface of the pressure relief component 6 faces an interior of the battery cell 10. The first surface 64 and the second surface 65 may be planar. The first surface 64 and the second surface 65 may be disposed in parallel, or may be disposed at a non-zero included angle. The first groove 61 is provided on the first surface 64, meaning that the first groove 61 is recessed in a direction from the first surface 64 toward the second surface 65, and a groove opening of the first groove 61 is formed on the first surface 64. The second groove 62 is provided on the second surface 65, meaning that the second groove 62 is recessed in a direction from the second surface 65 toward the first surface 64, and a groove opening of the second groove 62 is formed on the second surface 65. It can be understood that the groove segment 611 is provided on the first surface 64, and the groove segment 611 is recessed in a direction from the first surface 64 toward the second surface 65.

In this embodiment, the first groove 61 and the second groove 62 are respectively formed on the first surface 64 and the second surface 65. This causes the first groove 61 and the second groove 62 to be located on two sides of the pressure relief component 6 in the thickness direction, facilitating separate machining of the first groove 61 and the second groove 62 on the two sides of the pressure relief component 6, which is beneficial to reducing mutual influence between the first groove 61 and the second groove 62 during machining.

In some embodiments, with continued reference to FIG. 10 and FIG. **11****,** the first surface 64 is a surface of the pressure relief component 6 facing an exterior of the shell 1, and the second surface 65 is a surface of the pressure relief component 6 facing an interior of the shell 1.

It can be understood that the first surface 64 is the outer surface of the pressure relief component 6, and the second surface 65 is the inner surface of the pressure relief component 6. In embodiments where the first wall portion 13 serves as the pressure relief component 6, the first surface 64 is an outer surface of the first wall portion 13, and the second surface 65 is an inner surface of the first wall portion 13.

The first surface 64 is the surface of the pressure relief component 6 facing the exterior of the shell 1, causing the first groove 61 to be disposed on an outer side of the pressure relief component 6, which facilitates forming of the first groove 61 externally to the battery cell 10, and helps reduce the difficulty in forming the first groove 61, so as to improve production efficiency of the battery cell 10. The second surface 65 is the surface of the pressure relief component 6 facing the interior of the shell 1, causing the second groove 62 to be disposed on an inner side of the pressure relief component 6, such that, on the one hand, during outward flipping and opening of the predetermined pressure relief region 63, two opposite side surfaces of the second groove 62 in the width direction are less likely to abut against each other, which is beneficial to increasing the opening area of the predetermined pressure relief region 63; and on the other hand, the second groove 62 is not exposed to the exterior of the battery cell 10, thereby reducing the risk of oxidation and corrosion of the pressure relief component 6 in the region of the second groove 62.

In some embodiments, along the thickness direction of the first wall portion 13, the pressure relief component 6 has a second surface 65 facing an interior of the shell 1, the second groove 62 being disposed on the second surface 65.

The second surface 65 is the inner surface of the pressure relief component 6. In a case where the second groove 62 is provided on the second surface 65, the first groove 61 may be provided on the first surface 64, and the first groove 61 may also be disposed on the second surface 65.

In this embodiment, the second groove 62 is provided on the surface of the pressure relief component 6 facing the interior of the shell 1, causing the second groove 62 to be disposed on an inner side of the pressure relief component 6, such that, on the one hand, during outward flipping and opening of the predetermined pressure relief region 63, two opposite side surfaces of the second groove 62 in the width direction are less likely to abut against each other, which is beneficial to increasing the opening area of the predetermined pressure relief region 63; and on the other hand, the second groove 62 is not exposed to the exterior of the battery cell 10, thereby reducing the risk of oxidation and corrosion of the pressure relief component 6 in the region of the second groove 62.

In some embodiments, with continued reference to FIG. 9, the first wall portion 13 is a rectangular wall portion, and the first groove 61 and the second groove 62 are arranged along a width direction of the first wall portion 13.

The shell 1 may have a cuboid shape. The first wall portion 13 may be any wall portion in the shell 1 that is in a rectangular shape. The first wall portion 13 is a rectangular wall portion. That is, when viewed along the thickness direction of the first wall portion 13, the first wall portion 13 is substantially in a rectangular shape. A length of the first wall portion 13 is greater than a width of the first wall portion 13.

The arrangement of the first groove 61 and the second groove 62 along the width direction of the first wall portion 13 may be that the first groove 61 and the second groove 62 are disposed at intervals along the width direction of the first wall portion 13. Alternatively, it may be that a projection of the first groove 61 along the thickness direction of the first wall portion 13 and a projection of the second groove 62 along the thickness direction of the first wall portion 13 are exactly connected in the width direction of the first wall portion 13.

As an example, the first groove 61 and the second groove 62 are disposed at intervals along the width direction of the first wall portion 13, the width direction of the first wall portion 13 being parallel to the width direction of the second groove 62.

In this embodiment, the first wall portion 13 is a rectangular wall portion, and the first groove 61 and the second groove 62 are arranged along the width direction of the first wall portion 13. This arrangement causes the second groove 62 to be closer to an edge of the first wall portion 13 in the width direction of the first wall portion 13, causing the region of the pressure relief component 6 where the second groove 62 is disposed to have higher strength, thereby reducing the risk of the pressure relief component 6 rupturing along the second groove 62 when the battery cell 10 undergoes pressure relief. Furthermore, during normal use of the battery cell 10, the expansion amount of the battery cell 10 in the width direction of the first wall portion 13 is greater than the expansion amount in a length direction of the first wall portion 13, such that the expansion of the battery cell 10 in the width direction of the first wall portion 13 has greater influence on the pressure relief component 6; and the first groove 61 and the second groove 62 are arranged along the width direction of the first wall portion 13, such that the second groove 62 can provide an excellent absorption effect on the deformation energy of the battery cell 10 when the battery cell 10 expands and deforms along the width direction of the first wall portion 13, thereby reducing the influence of expansion of the battery cell 10 in the width direction of the first wall portion 13 on the pressure relief component 6.

In some embodiments, the second groove 62 extends along a linear trajectory. The second groove 62 is a linear groove, having a simple structure and thus being easy to machine and form.

In some embodiments, reference is made to FIG. 12. FIG. 12 is a partially enlarged view of at E in FIG. 11. Along the thickness direction of the first wall portion 13, the pressure relief component 6 has a first surface 64 and a second surface 65 oppositely disposed, and the groove segment 611 includes a multi-stage groove sequentially disposed in a direction from the first surface 64 toward the second surface 65, where in two adjacent stages of grooves, one stage of groove away from the first surface 64 is disposed on a groove bottom surface of one stage of groove close to the first surface 64, where one stage of groove in the multi-stage groove that is farthest away from the first surface 64 is a first-stage groove 6112, a minimum residual thickness of the first-stage groove 6112 being the minimum residual thickness of the groove segment 611, and a groove bottom surface of the first-stage groove 6112 being the groove bottom surface 6111 of the groove segment.

The groove segment 611 may be a two-stage groove, a three-stage groove, a four-stage groove, a five-stage groove, etc. It can be understood that the groove segment 611 is a stepped groove. Along a direction from the first surface 64 toward the second surface 65, the groove widths of various stages of grooves gradually decrease. As shown in FIG. 12, taking the groove segment 611 being a two-stage groove as an example, the two-stage groove includes respectively a first-stage groove 6112 and a second-stage groove. During processing, the second-stage groove having a larger width may be first machined in the first surface 64, and then the first-stage groove 6112 having a smaller width may be machined in a groove bottom surface of the second-stage groove.

The first-stage groove 6112 is one stage of groove in the groove segment 611 that is farthest away from the first surface 64. A groove bottom surface of the first-stage groove 6112 is the groove bottom surface 6111 of the groove segment, a minimum residual thickness of the first-stage groove 6112 is the minimum residual thickness of the groove segment 611, and a maximum distance between the groove bottom surface of the first-stage groove 6112 and the first surface 64 is equal to a maximum groove depth of the groove segment 611.

In this embodiment, by configuring the groove segment 611 to be a multi-stage groove arranged along the thickness direction of the first wall portion 13, during formation of the groove segment 611, the various stages of grooves can be machined one by one along the direction from the first surface 64 toward the second surface 65, which reduces the forming depth of each stage of groove, and reduces the forming force applied to the pressure relief component 6 during forming of the first groove 61, thereby reducing the risk of the pressure relief component 6 being damaged during forming of the first groove 61.

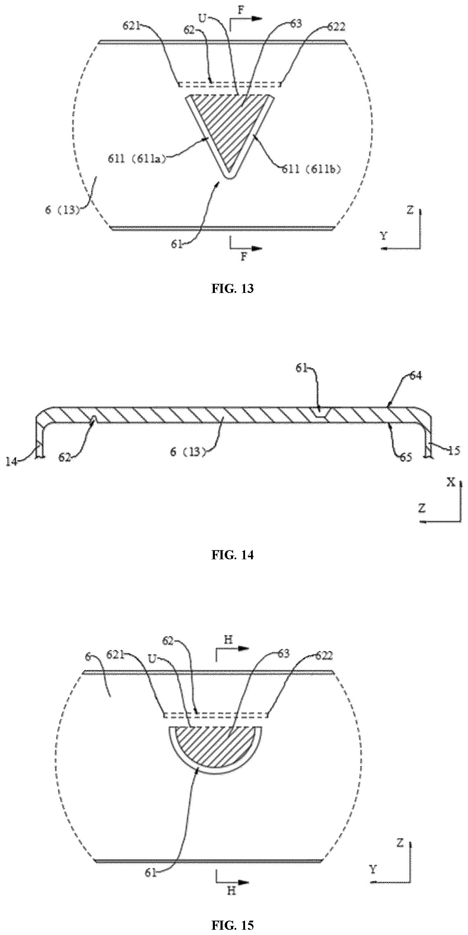

In some embodiments, reference is made to FIG. 13 and FIG. 14. FIG. 13 is a partial view of a shell 1 provided in some other embodiments of the present application; and FIG. 14 is an F-F cross-sectional view of the shell 1 shown in FIG. 13. The first groove 61 includes a plurality of groove segments 611, the plurality of groove segments 611 including a first groove segment 611 a and a second groove segment 611b, where the first groove segment 611a is connected with the second groove segment 611b, and the first groove segment 611a and the second groove segment 611b collectively define at least one predetermined pressure relief region 63.

The first groove segment 611a and the second groove segment 611b are two groove segments 611 in the first groove 61. The number of predetermined pressure relief regions 63 jointly defined by the first groove segment 611a and the second groove segment 611b may be one, or may be a plurality. The first groove segment 611a and the second groove segment 611b may be linear grooves extending along linear trajectories, or may be non-linear grooves extending along non-linear trajectories, for example, arc-shaped grooves extending along arc-shaped trajectories. If the first groove segment 611a and the second groove segment 611b both extend along linear trajectories, the first groove segment 611a and the second groove segment 611b may be arranged at an acute angle, a right angle, or an obtuse angle. The first groove segment 611a and the second groove segment 611b may both be connected end to end to form a V-shaped structure, an L-shaped structure, etc., and the first groove segment 611a and the second groove segment 611b may define one predetermined pressure relief region 63. The first groove segment 611a and the second groove segment 611b may also be arranged to cross each other to form an X-shaped structure, and the first groove segment 611a and the second groove segment 611b may define four predetermined pressure relief regions 63.

As an example, in the embodiment shown in FIG. 13 and FIG. 14, the first groove segment 611a is connected with the second groove segment 611b to form a V-shaped structure, and the first groove segment 611a and the second groove segment 611b define one predetermined pressure relief region 63. The first groove 61 is disposed on the first surface 64, and the second groove 62 is disposed on the second surface 65. A connection line in the first surface 64 between an end of the first groove segment 611 a away from the second groove segment 611b and an end of the second groove segment 611b away from the first groove segment 611a is a first connection line U. The first connection line U, the second groove segment 611b, and the second groove segment 611b are connected end to end to enclose the predetermined pressure relief region 63. In FIG. 13, a shaded portion in a triangular shape is the predetermined pressure relief region 63.

In this embodiment, at least one predetermined pressure relief region 63 is defined by the first groove segment 611a and the second groove segment 611b jointly. The first groove 61 of such a structure has a simple structure, and stress is more concentrated and weaker at a connection position between the first groove segment 611a and the second groove segment 611b, which enables the pressure relief component 6 to rupture rapidly from the first groove segment 611a and the second groove segment 611b after rupturing at the connection position between the first groove segment 611a and the second groove segment 611b when the battery cell 10 undergoes thermal runaway, causing the predetermined pressure relief region 63 to open more rapidly, so as to achieve timely pressure relief.

In some embodiments, with continued reference to FIG. 9 and FIG. 10, the first groove 61 includes a plurality of groove segments 611. The plurality of groove segments 611 includes a first groove segment 611a, a second groove segment 611b, and a third groove segment 611c, where the second groove segment 611b and the third groove segment 611c are oppositely disposed, the first groove segment 611a connects the second groove segment 611b and the third groove segment 611c, and the first groove segment 611a, the second groove segment 611b, and the third groove segment 611c jointly define at least one predetermined pressure relief region 63.

The first groove segment 611a, the second groove segment 611b, and the third groove segment 611c can jointly define one predetermined pressure relief region 63 or a plurality of predetermined pressure relief regions 63. The first groove segment 611a, the second groove segment 611b, and the third groove segment 611c are three groove segments 611 in the first groove 61. The first groove segment 611a, the second groove segment 611b, and the third groove segment 611c may be linear grooves extending along linear trajectories, or may be non-linear grooves extending along non-linear trajectories, for example, arc-shaped grooves extending along arc-shaped trajectories. If the first groove segment 611a, the second groove segment 611b, and the third groove segment 611c all extend along linear trajectories, the first groove segment 611a and the second groove segment 611b may be arranged at an acute angle, a right angle, or an obtuse angle, the first groove segment 611a and the second groove segment 611b may be arranged at an acute angle, a right angle, or an obtuse angle, the second groove segment 611b and the third groove segment 611c may be arranged in parallel, or an extension line of the second groove segment 611b may intersect with an extension line of the third groove segment 611c.

The first groove segment 611a connecting the second groove segment 611b and the third groove segment 611c may be that two ends of the first groove segment 611a are respectively connected to the second groove segment 611b and the third groove segment 611c, or may be that at least one of the second groove segment 611b and the third groove segment 611c is connected at a position deviating from the end portions of the first groove segment 611a, such that at least one of the second groove segment 611b and the third groove segment 611c is located between the two ends of the first groove segment 611a. A position where the second groove segment 611b is connected to the first groove segment 611a may be located at one end of the second groove segment 611b, or may be located between two ends of the second groove segment 611b. A position where the third groove segment 611c is connected to the first groove segment 611a may be located at one end of the third groove segment 611c, or may be located between two ends of the third groove segment 611c. The first groove segment 611a, the second groove segment 611b, and the third groove segment 611c may form a U-shaped structure, an N-shaped structure, an H-shaped structure, etc. If the first groove segment 611a, the second groove segment 611b, and the third groove segment 611c form a U-shaped structure, the first groove segment 611a, the second groove segment 611b, and the third groove segment 611c jointly define one predetermined pressure relief region 63. If the first groove segment 611a, the second groove segment 611b, and the third groove segment 611c form an N-shaped structure or an H-shaped structure, the first groove segment 611a, the second groove segment 611b, and the third groove segment 611c jointly define two predetermined pressure relief regions 63.

As an example, in the embodiment shown in FIG. 9 and FIG. 10, the first groove segment 611a, the second groove segment 611b, and the third groove segment 611c form an H-shaped structure; there are two predetermined pressure relief regions 63; the first groove 61 is disposed on the first surface 64; the second groove 62 is disposed on the second surface 65; a connection line in the first surface 64 between one end of the second groove segment 611b and one end of the third groove segment 611c forms one first connection line U; a connection line in the first surface 64 between the other end of the second groove segment 611b and the other end of the third groove segment 611c forms another first connection line U; the first groove segment 611a is located between the two first connection lines U; a portion of the second groove segment 611b, the first groove segment 611a, a portion of the third groove segment 611c, and one first connection line U are connected end to end to enclose one predetermined pressure relief region 63; the other portion of the second groove segment 611b, the first groove segment 611a, the other portion of the third groove segment 611c, and the other first connection line U are connected end to end to enclose another predetermined pressure relief region 63; and the two shaded portions shown in FIG. 9 are the two predetermined pressure relief regions 63.

In this embodiment, the first groove segment 611a connects the second groove segment 611b and the third groove segment 611c, such that an intersection position between the first groove segment 611a and the second groove segment 611b and a connection position between the first groove segment 611a and the third groove segment 611c are weaker, and more prone to fracturing and opening the predetermined pressure relief region 63 to relieve pressure. The second groove segment 611b and the third groove segment 611c being disposed oppositely can further increase the opening area of the predetermined pressure relief region 63, thereby increasing the pressure relief area of the battery cell 10 and improving the pressure relief rate of the battery cell 10.

In some embodiments, a connection position between the second groove segment 611b and the first groove segment 611a deviates from the two ends of the second groove segment 611b, and a connection position between the third groove segment 611c and the first groove segment 611a deviates from the two ends of the third groove segment 611c, thereby forming the predetermined pressure relief region 63 on the two sides of the first groove segment 611a.

The connection position between the second groove segment 611b and the first groove segment 611a deviates from the two ends of the second groove segment 611b, that is, the connection position between the second groove segment 611b and the first groove segment 611a is not located at any one of the two ends of the second groove segment 611b; and along an extension direction of the second groove segment 611b, the connection position between the second groove segment 611b and the first groove segment 611a is located between the two ends of the second groove segment 611b. The connection position between the second groove segment 611b and the first groove segment 611a may be located at a midpoint position of the second groove segment 611b, or may deviate from the midpoint position of the second groove segment 611b.

The connection position between the third groove segment 611c and the first groove segment 611a deviates from the two ends of the third groove segment 611c, that is, the connection position between the third groove segment 611c and the first groove segment 611a is not located at any one of the two ends of the third groove segment 611c; and along an extension direction of the third groove segment 611c, the connection position between the third groove segment 611c and the first groove segment 611a is located between the two ends of the third groove segment 611c. The connection position between the third groove segment 611c and the first groove segment 611a may be located at a midpoint position of the third groove segment 611c, or may deviate from the midpoint position of the third groove segment 611c.

In this embodiment, the connection position between the second groove segment 611b and the first groove segment 611a deviates from the two ends of the second groove segment 611b, and the connection position between the third groove segment 611c and the first groove segment 611a deviates from the two ends of the third groove segment 611c, such that the first groove segment 611a of the first groove 61 is located between the two predetermined pressure relief regions 63; and after the pressure relief component 6 ruptures along the first groove segment 611a, the two predetermined pressure relief regions 63 can open symmetrically in a splitting manner for pressure relief when the battery cell 10 undergoes pressure relief, enabling the two predetermined pressure relief regions 63 to open rapidly, which is beneficial to improving the pressure relief rate of the battery cell 10.

In some embodiments, the first groove segment 611a extends along a linear or arc-shaped trajectory; and/or the second groove segment 611b extends along a linear or arc-shaped trajectory; and/or the third groove segment 611c extends along a linear or arc-shaped trajectory.

As an example, in the embodiment shown in FIG. 9, the first groove segment 611a, the second groove segment 611b, and the third groove segment 611c all extend along linear trajectories, and the second groove segment 611b and the third groove segment 611c are both perpendicular to the first groove segment 611a.

If the first groove segment 611a extends along a linear trajectory, the first groove segment 611a is a linear groove, which can reduce the difficulty in forming the first groove segment 611a. If the first groove segment 611a extends along an arc-shaped trajectory, the first groove segment 611a is an arc-shaped groove, which enables the pressure relief component 6 to be more likely to rupture along the first groove segment 611a when the battery cell 10 undergoes pressure relief, thereby achieving more rapid opening of the predetermined pressure relief region 63. If the second groove segment 611b extends along a linear trajectory, the second groove segment 611b is a linear groove, which can reduce the difficulty in forming the second groove segment 611b. If the second groove segment 611b extends along an arc-shaped trajectory, the second groove segment 611b is an arc-shaped groove, which enables the pressure relief component 6 to be more likely to rupture along the second groove segment 611b when the battery cell 10 undergoes pressure relief, thereby achieving more rapid opening of the predetermined pressure relief region 63. If the third groove segment 611c extends along a linear trajectory, the third groove segment 611c is a linear groove, which can reduce the difficulty in forming the third groove segment 611c. If the third groove segment 611c extends along an arc-shaped trajectory, the third groove segment 611c is an arc-shaped groove, which enables the pressure relief component 6 to be more likely to rupture along the third groove segment 611c when the battery cell 10 undergoes pressure relief, thereby achieving more rapid opening of the predetermined pressure relief region 63.

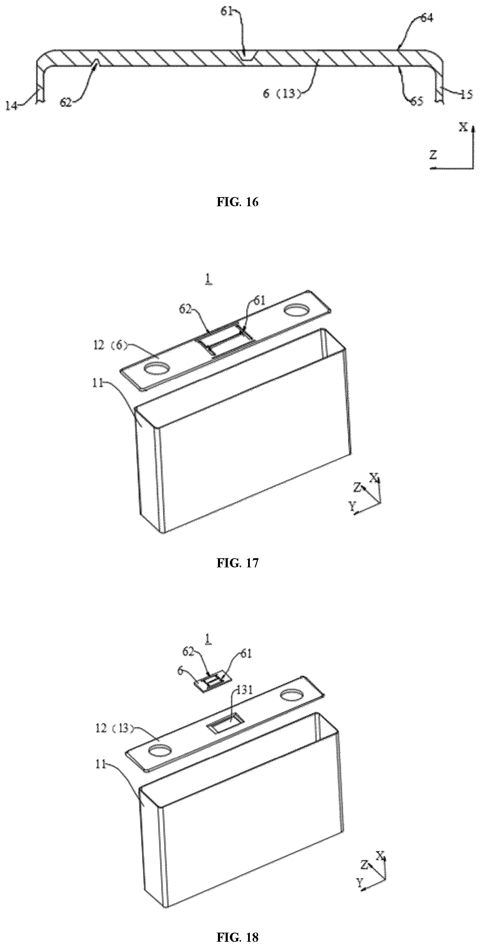

In some embodiments, reference is made to FIG. 15 and FIG. 16. FIG. 15 is a partial view of the shell 1 provided in still some other embodiments of the present application; and FIG. 16 is a G-G cross-sectional view of the shell 1 shown in FIG. 15. The first groove 61 extends along an arc-shaped trajectory.

A central angle of the first groove 61 may be less than 15°, 30°, 45°, 60°, 90°, 120°, 150°, 180°, 210°, 240°, 270°, 300°, 330°, etc.

As an example, in the embodiment shown in FIG. 15 and FIG. 16, the first groove 61 is disposed on the first surface 64, the second groove 62 is disposed on the second surface 65, a connection line between two ends of the first groove 61 forms a first connection line U, and the first groove 61 and the first connection line U are connected end to end to enclose one predetermined pressure relief region 63.

In this embodiment, the first groove 61 extends along an arc-shaped trajectory, and the first groove 61 is an arc-shaped groove. The first groove 61 of such a structure includes only one groove segment 611, thereby simplifying the structure of the first groove 61.

In some embodiments, reference is made to FIG. 17. FIG. 17 is an exploded view of a shell 1 provided in some embodiments of the present application (where one end of the shell body 11 is formed with an opening, and the end cover 12 is a pressure relief component 6). The pressure relief component 6 is integrally formed with a first wall portion 13 (not shown in FIG. 17), such that the pressure relief component 6 is at least part of the first wall portion 13.

It can be understood that the first groove 61 is disposed on the first wall portion 13, and in embodiments where the pressure relief component 6 is provided with the second groove 62, the second groove 62 is also disposed on the first wall portion 13. A portion of the first wall portion 13 may serve as the pressure relief component 6; or an entirety of the first wall portion 13 may serve as the pressure relief component 6, that is, the first wall portion 13 and the pressure relief component 6 are the same component. One of the first surface 64 and the second surface 65 of the pressure relief component 6 is an inner surface of the first wall portion 13, and the other is an outer surface of the first wall portion 13.

In this embodiment, the pressure relief component 6 is integrally formed with the first wall portion 13, which enables the first groove 61 to be directly formed in the first wall portion 13, forming an integrated pressure relief structure with higher reliability, thereby eliminating an installation process of the pressure relief component 6, and offering better economic efficiency.

In some embodiments, reference is made to FIG. 18. FIG. 18 is an exploded view of a shell 1 provided in some embodiments of the present application (where one end of the shell body 11 is formed with an opening, the end cover 12 is a first wall portion 13, and the pressure relief component 6 is installed on the first wall portion 13). The pressure relief component 6 and the first wall portion 13 are separately provided, and the pressure relief component 6 is installed on the first wall portion 13.

The pressure relief component 6 and the shell 1 are two separate components, and the pressure relief component 6 may be separately produced and then installed on the first wall portion 13. The pressure relief component 6 may be installed on the first wall portion 13 by means of welding, riveting, bonding, etc. As an example, the first wall portion 13 is provided with a pressure relief hole 131, the pressure relief component 6 covers the pressure relief hole 131, and the pressure relief component 6 is welded to the first wall portion 13.

In this embodiment, the pressure relief component 6 is disposed separately from the first wall portion 13, the pressure relief component 6 is a component independent from the shell 1, the pressure relief component 6 and the shell 1 may be produced and assembled separately, resulting in lower production difficulty and higher efficiency.

In some embodiments, the first groove 61 is formed by stamping in the pressure relief component 6.

It can be understood that the groove segment 611 is formed on the pressure relief component 6 by means of stamping. If the groove segment 611 has a one-stage groove structure, when forming the groove segment 611 on the pressure relief component 6, the first wall portion 13 may be stamped once to stamp the groove segment 611 on the pressure relief component 6; if the groove segment 611 has a multi-stage groove structure, when forming the groove segment 611 on the pressure relief component 6, the pressure relief component 6 may be stamped multiple times, with one stage of groove stamped each time, and after multiple stampings, the groove segment 611 is finally formed. It can be understood that in embodiments where the pressure relief component 6 is integrally formed with the first wall portion 13, the groove segment 611 is formed by stamping on the first wall portion 13.

In this embodiment, the first groove 61 is formed by stamping on the pressure relief component 6, and thus the method for forming the first groove 61 is simple, thereby contributing to reducing the production cost of the battery cell 10.

In some embodiments, with continued reference to FIG. 17 and FIG. 18, the shell 1 includes a shell body 11 and an end cover 12, where at least one end of the shell body 11 is formed with an opening, and the end cover 12 is in one-to-one correspondence with the opening, the end cover 12 closing the opening. Among these, at least one end cover 12 is the first wall portion 13.

The shell body 11 may have only one opening, for example, only one end of the shell body 11 is formed with an opening; or the shell body 11 may also have a plurality of openings, for example, two opposite ends of the shell body 11 are both formed with openings. The number of the end cover 12 is the same as the number of openings of the shell body 11. It can be understood that if the shell body 11 has only one opening, there is one end cover 12, this end cover 12 being the first wall portion 13; if the shell body 11 has two openings, there are two end covers 12, where one end cover 12 may be the first wall portion 13, or both end covers 12 may be the first wall portion 13.

In embodiments where one end of the shell body 11 is formed with an opening, a positive electrode terminal and a negative electrode terminal may be disposed on the end cover 12, where a positive tab and a negative tab may be formed at one end of the electrode assembly 2 facing the end cover 12, thereby facilitating respective electrical connections with the positive electrode terminal and the negative electrode terminal. In embodiments where two opposite ends of the shell body 11 are both formed with openings, the positive electrode terminal may be disposed on one end cover 12, and the negative electrode terminal may be disposed on the other end cover 12; and the positive tab and the negative tab may be formed at two opposite ends of the electrode assembly 2, respectively, thereby facilitating the electrical connection between the positive tab and the positive electrode terminal and the electrical connection between the negative tab and the negative electrode terminal.

In the embodiment shown in FIG. 17, one end of the shell body 11 is formed with an opening, and the end cover 12 is the first wall portion 13 (not shown in FIG. 17), the first wall portion 13 being the pressure relief component 6. In the embodiment shown in FIG. 18, one end of the shell body 11 is formed with an opening, the end cover 12 is the first wall portion 13, and the pressure relief component 6 is installed on the first wall portion 13.

In this embodiment, at least one end cover 12 in the shell 1 is the first wall portion 13, which enables the at least one end cover 12 to have a pressure relief function, and results in lower difficulty in forming the first groove 61 on the end cover 12 or in installing the pressure relief component 6.

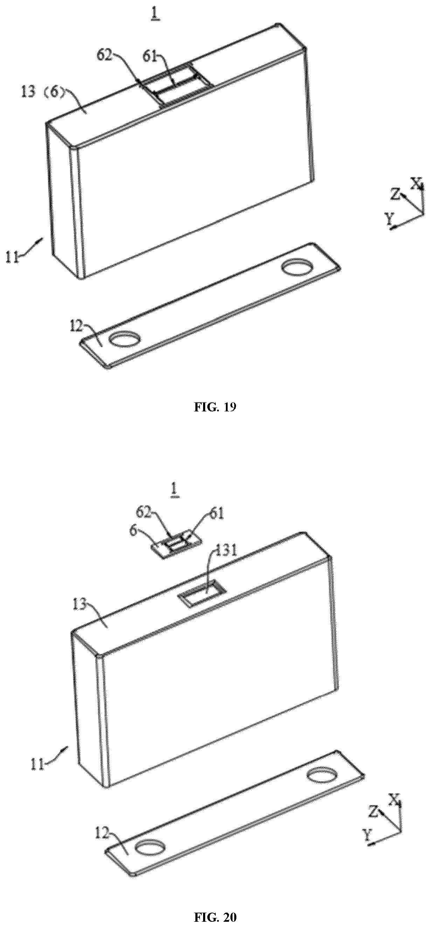

In some embodiments, reference is made to FIG. 19 and FIG. 20. FIG. 19 is an exploded view of a shell 1 provided in some embodiments of the present application (where one end of a shell body 11 is formed with an opening, the shell body 11 includes a first wall portion 13, and the pressure relief component 6 is the first wall portion 13); and FIG. 20 is an exploded view of a shell 1 provided in some embodiments of the present application (where one end of a shell body 11 is formed with an opening, the shell body 11 includes a first wall portion 13, and the pressure relief component 6 is installed on the first wall portion 13). The shell 1 includes a shell body 11 and an end cover 12, where at least one end of the shell body 11 is formed with an opening, and the end cover 12 is in one-to-one correspondence with the opening, the end cover 12 closing the opening. At least one wall portion in the shell body 11 is the first wall portion 13.

The shell body 11 may have only one opening, for example, only one end of the shell body 11 is formed with an opening; or the shell body 11 may also have a plurality of openings, for example, two opposite ends of the shell body 11 are both formed with openings. The number of the end cover 12 is the same as the number of openings of the shell body 11. It can be understood that if the shell body 11 has only one opening, there is one end cover 12; or if the shell body 11 has two openings, there are two end covers 12. In embodiments where one end of the shell body 11 is formed with an opening, a positive electrode terminal and a negative electrode terminal may be disposed on the end cover 12, where a positive tab and a negative tab may be formed at one end of the electrode assembly 2 facing the end cover 12, thereby facilitating respective electrical connections with the positive electrode terminal and the negative electrode terminal. In embodiments where two opposite ends of the shell body 11 are both formed with openings, the positive electrode terminal may be disposed on one end cover 12, and the negative electrode terminal may be disposed on the other end cover 12; and the positive tab and the negative tab may be formed at two opposite ends of the electrode assembly 2, respectively, thereby facilitating the electrical connection between the positive tab and the positive electrode terminal and the electrical connection between the negative tab and the negative electrode terminal. In the shell body 11, one wall portion may be the first wall portion 13, or a plurality of wall portions may be the first wall portion 13.

In this embodiment, at least one wall portion in the shell body 11 in the shell 1 is the first wall portion 13, which enables the shell body 11 to have a pressure relief function. When the battery cell 10 undergoes pressure relief, emissions discharged from the interior of the battery cell 10 are less likely to affect external components on the outer side of the end cover 12, thereby reducing the risk of the external components being damaged by the emissions. The external components may be busbar components, temperature detection components, voltage detection components, etc., connected to the electrode terminal 3. The emissions include, but are not limited to: electrolyte solution, dissolved or fragmented positive and negative electrode plates, fragments of a separator, high-temperature and high-pressure gas generated by reactions, flames, etc.

In some embodiments, with continued reference to FIG. 19 and FIG. 20, only one end of the shell body 11 is formed with an opening, and a wall portion of the shell body 11 disposed opposite to the end cover 12 is the first wall portion 13.

As an example, the shell body 11 is cuboid-shaped, and the shell body 11 further includes four side walls, where the four side walls surround the periphery of the first wall portion 13, and the four side walls and the first wall portion 13 jointly define the space inside the shell body 11. In the embodiment shown in FIG. 19, one end of the shell body 11 is formed with an opening, a wall portion in the shell body 11 opposite to the end cover 12 is the first wall portion 13, and the pressure relief component 6 is the first wall portion 13. In the embodiment shown in FIG. 20, one end of the shell body 11 is formed with an opening, a wall portion in the shell body 11 opposite to the end cover 12 is the first wall portion 13, and the pressure relief component 6 is installed on the first wall portion 13.

In this embodiment, the shell body 11 is of a structure formed with an opening at one end, causing the overall structure of the battery cell 10 to be simpler. The first wall portion 13 being a wall portion of the shell body 11 opposite to the end cover 12 enables directional pressure relief from the bottom of the shell body 11.

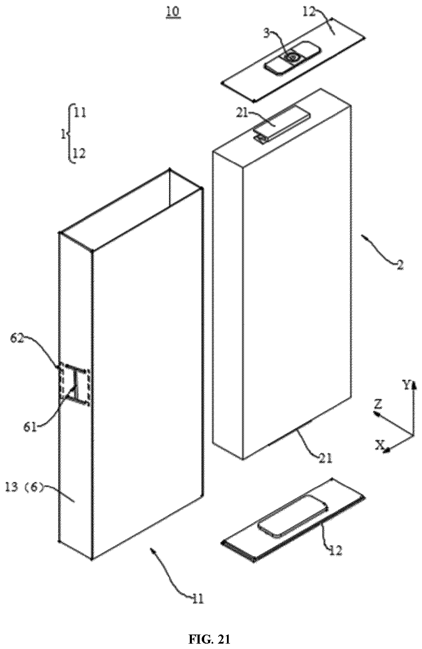

In some embodiments, reference is made to FIG. 21. FIG. 21 is an exploded view of a battery cell 10 provided in some other embodiments of the present application. Two opposite ends of the shell body 11 are both formed with the openings, and at least one wall portion in the shell body 11 is the first wall portion 13.

In the shell body 11, one wall portion may be the first wall portion 13, or a plurality of wall portions may be the first wall portion 13. The pressure relief component 6 may be the first wall portion 13, or the pressure relief component 6 may be installed on the first wall portion 13.

As an example, the shell body 11 is cuboid-shaped, and the shell body 11 includes four wall portions, where the four wall portions are sequentially connected end to end and jointly define the space inside the shell body 11. Among the four wall portions, two opposite wall portions are large-area wall portions, and the other two wall portions are small-area wall portions, where the area of an outer surface of a large-area wall portion is larger than the area of an outer surface of a small-area wall portion, and one or two small-area wall portions in the shell body 11 are the first wall portion 13.

In this embodiment, the shell body 11 is of a structure in which both two opposite ends are formed with openings, such that an electrode assembly 2 may be assembled into the shell body 11 through any of the openings, thereby enabling reduction in the assembly difficulty of the battery cell 10 and improving the assembly quality of the battery cell 10. The shell body 11 of such a structure allows a height (where both ends of the shell body 11 in a height direction being formed with openings) to be made larger, which is beneficial to increasing the electrical capacity of the battery cell 10.

In some embodiments, a material of the pressure relief component 6 includes a steel material.

The steel material may be carbon steel, alloy steel, stainless steel, etc.

It can be understood that in embodiments where the pressure relief component 6 is integrally formed with the first wall portion 13, the material of the first wall portion 13 includes the steel material. If the first wall portion 13 is the end cover 12, the end cover 12 may be a steel material; or if the first wall portion 13 is a wall portion in the shell body 11, the shell body 11 may be a steel material.

In this embodiment, the steel material has high-strength characteristics. A pressure relief component 6 made from the steel material has better strength, and given a certain burst pressure of the battery cell 10, the pressure relief component 6 can be made thinner, thereby reducing volume of the pressure relief component 6. In embodiments where the pressure relief component 6 is integrally formed with the first wall portion 13, the first wall portion 13 is made from the steel material; the first wall portion 13 may be made thinner, and given a certain volume of the shell 1, a capacity of the shell 1 can be increased to provide more space for the electrode assembly 2, which is beneficial for improving a volumetric energy density of the battery cell 10.

In some embodiments, the steel material is carbon steel or stainless steel.

The carbon steel may be low-carbon steel, medium-carbon steel, or high-carbon steel.

In some embodiments, a material of the pressure relief component 6 includes aluminum alloy.

It can be understood that in embodiments where the pressure relief component 6 is integrally formed with the first wall portion 13, the material of the first wall portion 13 includes the aluminum alloy. If the first wall portion 13 is the end cover 12, the end cover 12 may be an aluminum alloy material; or if the first wall portion 13 is a wall portion in the shell body 11, the shell body 11 may be an aluminum alloy material.

The aluminum alloy has lightweight and good ductility characteristics, making it easier to machine the first groove 61 on the pressure relief component 6.

In some embodiments, the aluminum alloy includes components at percentage mass contents of: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single element ≤ 0.03%.

This aluminum alloy belongs to the 3xxx series aluminum. The aluminum alloy has lower hardness and better formability, which reduces the machining difficulty of the first groove 61, and is beneficial to improving the machining accuracy of the first groove 61 and enhancing the pressure relief consistency of the pressure relief component 6.

In some embodiments, the aluminum alloy includes components at percentage mass contents of: aluminum ≥ 96.7%, 0.05% ≤ copper ≤ 0.2%, iron ≤ 0.7%, manganese ≤ 1.5%, silicon ≤ 0.6%, zinc ≤ 0.1%, components of other individual elements ≤ 0.05%, and total components of other elements ≤ 0.15%.

This aluminum alloy belongs to the 5xxx series aluminum. A pressure relief component 6 made from this aluminum alloy has higher hardness and greater strength, possessing good damage resistance capability. An embodiment of the present application provides a battery 100, which includes the battery cell 10 provided in any one of the aforementioned embodiments.

An embodiment of the present application provides a battery 100, which includes the battery cell 10 provided in any one of the aforementioned embodiments.

An embodiment of the present application provides an electrical device, which includes the battery cell 10 provided in any one of the aforementioned embodiments, the battery cell 10 being used to provide electric energy to the electrical device.

Referring to FIG. 3, an embodiment of the present application further provides a battery cell 10. The battery cell 10 includes the shell 1 and the electrode assembly 2, where the electrode assembly 2 is provided with a positive tab and a negative tab, and the electrode assembly 2 is accommodated within the shell 1. The shell 1 is cuboid-shaped. The shell 1 includes a shell body 11 and an end cover 12, where one end of the shell body 11 is formed with an opening, and the end cover 12 seals the opening. The end cover 12 is provided with a positive electrode terminal and a negative electrode terminal, where the positive electrode terminal is electrically connected to a positive tab through one current collecting member 4, and the negative electrode terminal is electrically connected to a negative tab through another current collecting member 4.

Among these, with reference to FIG. 8 - FIG. 12, a wall portion of the shell body 11 opposite to the end cover 12 is the pressure relief component 6. The pressure relief component 6 is a rectangular wall portion, where an outer surface of the pressure relief component 6 is provided with the first groove 61, and an inner surface of the pressure relief component 6 is provided with two second grooves 62. Along a width direction of the pressure relief component 6, the first groove 61 is located between the two second grooves 62, and the second grooves 62 and the first groove 61 are disposed at intervals. The first groove 61 includes a plurality of groove segments 611. A minimum residual thickness of the groove segments 611 is less than a minimum residual thickness of the second grooves 62; and the groove segments 611 are stepped grooves, and the groove segments 611 are a two-stage groove. The plurality of groove segments 611 form an H-shaped structure. The first groove 61 includes a first groove segment 611a, a second groove segment 611b, and a third groove segment 611c, where the first groove segment 611a, the second groove segment 611b, and the third groove segment 611c all extend along linear trajectories, the second groove segment 611b and the third groove segment 611c are arranged parallel, the first groove segment 611a connects the second groove segment 611b and the third groove segment 611c, and the second groove segment 611b and the third groove segment 611c are both perpendicular to the first groove segment 611a; a connection position between the first groove segment 611a and the second groove segment 611b is located at a midpoint position of the second groove segment 611b, and a connection position between the first groove segment 611a and the third groove segment 611c is located at a midpoint position of the third groove segment 611c; and along a thickness direction of the first wall portion 13, the two ends of a projection of the second groove 62 along an extension direction respectively extend beyond the second groove segment 611b and the third groove segment 611c. Among these, the first groove segment 611a, the second groove segment 611b, and the third groove segment 611c jointly define two predetermined pressure relief regions 63, each predetermined pressure relief region 63 being disposed in correspondence with one second groove 62; the pressure relief component 6 is configured to rupture along at least part of the first groove 61 when the battery cell 10 undergoes pressure relief; and the second groove 62 is configured to guide at least part of the predetermined pressure relief region 63 to flip, so as to open at least part of the predetermined pressure relief region 63.

A minimum width of a groove bottom surface 6111 of the groove segment is W, and along the thickness direction of the first wall portion 13, a minimum residual thickness of the groove segment 611 is D₁, where 0.005 mm² ≤ W×D₁ ≤ 0.12 mm²; 0.05 mm ≤ W ≤ 0.5 mm; 0.05 mm ≤ D₁ ≤ 0.6 mm.

In such a battery cell 10, when W × D₁ ≥ 0.005 mm², the fatigue resistance strength in a region of the pressure relief component 6 where the groove segment 611 is disposed is enhanced, thereby reducing the risk of the pressure relief component 6 rupturing prematurely along the groove segment 611 during normal use of the battery cell 10, and improving the service lifetime of the battery cell 10. When W × D₁ ≤ 0.12 mm², the pressure relief component 6 is enabled to rupture more timely along the groove segment 611 when thermal runaway occurs in the battery cell 10, thereby improving pressure relief timeliness of the battery cell 10, and reducing the risk of explosion of the battery cell 10. Therefore, 0.005 mm² ≤ W×D₁ ≤ 0.12 mm², which achieves a balance between the service lifetime requirements of the battery cell 10 during normal use and the reliability requirements of the battery cell 10 during thermal runaway. Furthermore, the pressure relief component 6 is provided with the second groove 62, where the second groove 62 can guide at least part of the predetermined pressure relief region 63 to flip, so as to open at least part of the predetermined pressure relief region 63 to relieve pressure; and the second groove 62 plays an auxiliary role for the predetermined pressure relief region 63, which makes flipping of the predetermined pressure relief region 63 easier, and reduces flipping difficulty of the predetermined pressure relief region 63, enabling the predetermined pressure relief region 63 to open more rapidly during a process of the pressure relief component 6 rupturing along the first groove 61, thereby improving the opening rate of the predetermined pressure relief region 63.

It is to be noted that, without conflict, the embodiments in the present application and the features in the examples may be combined with each other.

The features and performance of the present application are described in further detail below with reference to the examples.

The battery cells 10 in various examples and comparative examples are all prepared and tested according to the following methods.

### I. Preparation of the battery cell 10

### 1. Preparation of the positive electrode plate

Positive electrode active material LiNi_{0.7}Co_{0.1}Mn_{0.1}O₂, conductive agent Super P, and binder polyvinylidene fluoride (PVDF) are made into a positive electrode slurry in N-methyl pyrrolidone (NMP), where the solid content in the positive electrode slurry is 50wt%, and the mass ratio of LiNi_{0.7}Co_{0.1}Mn_{0.1}O₂, Super P, and PVDF in the solid components is 8:1:1. The positive electrode slurry is coated on the upper and lower surfaces of the current collector aluminum foil and dried at 85°C, followed by cold pressing. After trimming, cutting, and slitting, it is dried under vacuum conditions at 85°C for 4h to make the positive electrode plate.

### 2. Preparation of the negative electrode plate

Graphite, conductive agent Super P, thickener carboxymethyl cellulose (CMC), and adhesive agent styrene butadiene rubber (SBR) are mixed uniformly in deionized water to make a negative electrode slurry, where the solid content in the negative electrode slurry is 30wt%, and the mass ratio of graphite, silicon monoxide, Super P, CMC, and adhesive agent styrene butadiene rubber (SBR) in the solid components is 88:7:3:2. The negative electrode slurry is coated on the upper and lower surfaces of the current collector copper foil and dried at 85°C, followed by cold pressing, trimming, cutting, and slitting, after which it is dried under vacuum conditions at 120°C for 12h to make the negative electrode plate.

### 3. Preparation of the electrolyte

In an argon atmosphere glove box (H₂O<0.1ppm, O₂<0.1ppm), the thoroughly dried electrolyte salt LiPF₆ is dissolved in a mixed solvent (the mixed solvent includes ethylene carbonate (EC) and diethyl carbonate (DEC), and ethylene carbonate (EC) and diethyl carbonate (DEC) are mixed at a mass ratio of 50:50) to obtain a liquid electrolyte with a concentration of 1mol/L after uniform mixing.

### 4. Separator

A 16µm polyethylene film is used as the separator.

### 5. Preparation of the battery cell 10

The positive electrode plate, the separator, and the negative electrode plate are stacked in sequence, allowing the separator to be positioned between the positive and negative electrode plates to function to isolate the positive and negative electrode plates, and then wound to obtain the electrode assembly 2. The electrode assembly 2 is placed within the aluminum shell 1. The electrolyte prepared as described above is injected into the dried shell 1, and after sealing, standing, formation, shaping, capacity testing, etc., the preparation of the battery cell 10 is completed.

The preparation of the battery cells 10 in all examples and comparative examples employ the aforementioned method. The battery cells 10 in the examples and comparative examples are of the same chemical system. The difference among the battery cells 10 in the examples and comparative examples lay in the minimum width W of the groove bottom surface 6111 of the groove segment of the first groove 61 and the minimum residual thickness D₁ of the groove segment 611 being different. In the examples and comparative examples, the shell 1 of the battery cell 10 is of a cuboid structure. The shell body 11 of the shell 1 is of a structure in which one end is formed with an opening, where the wall portion in the shell body 11 opposite to the end cover 12 is the first wall portion 13, the first wall portion 13 being a rectangular wall portion. The shell body 11 is made of an aluminum alloy material. The wall portion of the shell body 11 opposite to the end cover 12 is the first wall portion 13. The first wall portion 13 served as the pressure relief component 6. The first groove 61 has an H-shaped structure and is a two-stage groove. The first groove 61 is disposed on the outer surface of the first wall portion 13, and the second groove 62 is disposed on the inner surface of the first wall portion 13. Along the width direction of the first wall portion 13, the first groove 61 is located between the two second grooves 62. In the examples and comparative examples, the measured groove segment 611 is the first groove segment 611a. When measuring the minimum width W of the groove bottom surface 6111 of the groove segment of the first groove segment 611a and the minimum residual thickness D₁ of the first groove segment 611a, the first wall portion 13 is cut open along a direction perpendicular to the first groove segment 611a, and W and D₁ are measured on the cut surface.

### II. Testing of Performance Parameters

### 1. Measurement method for the cycle fatigue count of the battery cell 10

1) A dedicated test fixture is prepared. Specifically, the fixture includes three 10 mm steel plates (a first steel plate, a second steel plate, and a third steel plate). Each steel plate can completely cover the largest surface area of the battery cell 10 (the outer surface of the shell body 11 that is perpendicular to the width direction of the first wall portion 13). The first steel plate and the third steel plate are located at the two ends of the fixture and are fixedly connected by bolts. The second steel plate is located between the first steel plate and the third steel plate, and the second steel plate is constrained by guide rails such that the second steel plate can only perform translational movement in the thickness direction of the second steel plate.
2) The battery cell 10 is installed between the first steel plate and the second steel plate, and supporting structures are placed between the largest surface area on one side of the battery cell 10 and the first steel plate, and between the largest surface area on the other side and the second steel plate. The supporting structure may be a thermal insulation pad or a water-cooling plate (consistent with the material/structure between two adjacent battery cells 10 in the actual battery 100). The supporting structure may be compressed to provide expansion space for the battery cell 10 during the charge-discharge cycle aging process. The largest surface area of the battery cell 10 is in full contact with the supporting structure, the first steel plate is in full contact with the corresponding supporting structure, and the second steel plate is in full contact with the corresponding supporting structure. A pressure sensor is provided between the second steel plate and the third steel plate.
3) The position of the second steel plate is adjusted by adjusting the preload force of the bolts, the pressure sensor is observed to ensure that the initial compressive force applied to the battery cell 10 is 2000 N, and the positive electrode terminal and the positive electrode terminal of the battery cell 10 are connected to the charging and discharging device.
4) The battery cell 10 and the fixture are placed in a constant temperature environment of 25±2°C, and the test is started after the battery cell 10 reaches temperature equilibrium.
5) For the test steps, reference is made to Section 6.4 "Standard Cycle Life" of "GBT31484-2015 Cycle life requirements and test methods for traction battery used in electric vehicles", and the test cycle termination condition is changed to "stopping the test when damage occurs at the location where the first groove 61 is disposed on the first wall portion 13".

Specifically, the test is performed according to the following steps:
a) Discharge at 1I₁(A) current to 2.8V;
b) Rest for not less than 30 min;
c) Charge according to the method in 6.1.1.3 of "GBT31484-2015 Cycle life requirements and test methods for traction battery used in electric vehicles";
d) Rest for not less than 30 min;
e) Discharge at 1I₁ (A) current to 2.8V;
f) Repeat steps b) to e) until damage occurs at the location where the first groove 61 is disposed on the first wall portion 13, then stop the test.

That is, during the test process, the region where the first groove 61 is disposed on the first wall portion 13 of the battery cell 10 is continuously observed until damage and electrolyte leakage occur in that region, and the cycle count is recorded as the cycle fatigue count of the battery cell 10. Here, the greater the cycle fatigue count of the battery cell 10, the lower the probability of valve opening and electrolyte leakage caused by gas generation during long-term use of the battery cell 10, and the longer the service life.

### 2. Thermal runaway test method for the battery cell 10

1. A heating plate is selected according to the size of the battery cell 10, where the size of the heating plate should cover the largest surface area of the battery cell 10 as much as possible (coverage area 260%);
2. Before testing, the battery cell 10 is charged to 100% SOC, and the battery cell 10 is placed in a constant temperature environment of 25±2°C;

### 3. Sensor arrangement:

1) Temperature sensing wire arrangement: one layer of Teflon is attached to the central region of each of the two largest surface areas of the battery cell 10, a temperature sensing wire is arranged above the Teflon, then another layer of Teflon is attached;
2) Voltage sampling wire arrangement: one layer of Teflon is attached to each of the positive electrode terminal, the positive electrode terminal, and the shell 1 of the battery cell 10, a voltage sampling wire is arranged above the Teflon, then another layer of Teflon is attached;
3) Gas tube arrangement: a hole is drilled in the first wall portion 13 of the battery cell 10, where along the length direction of the first wall portion 13, the drilling position is located at the midpoint position between the first groove 61 and the side surface of the shell body 11 (the outer surface of the wall portion of the shell body 11 that is adjacent to the first wall portion 13 along the length direction of the first wall portion 13). A gas tube is inserted into the hole and seal it, and the gas tube is connected to a gas pressure sensor; and
4) The temperature sensing wire, the voltage sampling wire, and the gas pressure sensor are connected to a data acquisition instrument to collect and analyze data in real time. The acquisition frequency of the data acquisition instrument is: ≤0.1 s;
   4. Fixture assembly: the largest surface area of the battery cell 10 (the outer surface of the shell body 11 perpendicular to the width direction of the first wall portion 13) is completely covered with the fixture, where the clamping force is 3000 N, and the arrangement sequence of the fixture, the heating plate, and the battery cell 10 is: fixture + heating plate + battery cell 10 + fixture;
   5. Testing: the data acquisition instrument is turned on to collect temperature, voltage, and gas pressure data, then the heating plate is activated at the power of 500 W to heat the battery cell 10 until thermal runaway of the battery cell 10 occurs; and
   6. Obtain the pressure holding duration of the battery cell 10: the thermal runaway moment and the valve opening moment are determined based on the temperature, voltage, and gas pressure data collected by the data acquisition instrument, and the pressure holding duration of the battery cell 10 is obtained according to pressure holding duration = valve opening moment - thermal runaway moment.

Thermal runaway determination criteria: a) the occurrence of a voltage drop of the object is triggered, and the voltage decreases by more than 25% of the initial voltage; b) the temperature at the detection point reaches the maximum operating temperature specified by the manufacturer; and c) the temperature rise rate at the detection point dT/dt ≥ 1°C/s, and lasts for more than 3 s. When a) and c) or b) and c) occur, it is determined that thermal runaway has occurred, and the thermal runaway moment is determined.

Valve opening moment determination: when the gas pressure decreases by more than 25%, it can be determined that valve opening (at least part of the first wall portion 13 ruptures along the first groove 61) has occurred. The moment when the gas pressure begins to decrease is the valve opening moment.

### III. Test Results

The performance test results of the battery cells 10 in various examples and comparative examples are shown in Table 1, specifically as follows:

**Table 1**

| Serial number | W(mm) | D₁(mm) | W×D₁(mm²) | Cycle Fatigue Count of Battery Cell 10 | Pressure Holding Duration of Battery Cell 10 (s) |
|---|---|---|---|---|---|
| Example 1 | 0.05 | 0.1 | 0.005 | 950 | 1.7 |
| Example 2 | 0.1 | 0.08 | 0.008 | 1219 | 2 |
| Example 3 | 0.1 | 0.1 | 0.01 | 1432 | 2.4 |
| Example 4 | 0.1 | 0.3 | 0.03 | 1688 | 2.7 |
| Example 5 | 0.2 | 0.25 | 0.05 | 1876 | 3 |
| Example 6 | 0.2 | 0.4 | 0.08 | 2278 | 3.3 |
| Example 7 | 0.3 | 0.3 | 0.09 | 2432 | 3.9 |
| Example 8 | 0.5 | 0.2 | 0.1 | 2725 | 4.4 |
| Example 9 | 0.2 | 0.6 | 0.12 | 2981 | 5 |
| Comparative Example 1 | 0.04 | 0.1 | 0.004 | 865 | 1.5 |
| Comparative Example 2 | 0.05 | 0.06 | 0.003 | 803 | 1.2 |
| Comparative Example 3 | 0.3 | 0.5 | 0.15 | 3177 | 5.5 |
| Comparative Example 4 | 0.6 | 0.3 | 0.18 | 3321 | 6 |

As shown in Table 1, from the comparison between Examples 1-9 and Comparative Examples 3-4, it can be seen that when W×D₁ ≤ 0.12 mm², the pressure holding duration of the battery cell 10 during thermal runaway is shorter, the burst pressure of the battery cell 10 is lower, and the pressure relief timeliness of the battery cell 10 during thermal runaway is better, which can reduce the risk of explosion of the battery cell 10, and improve the reliability of the battery cell 10. From the comparison between Examples 1-9 and Comparative Examples 1-2, it can be seen that when W×D₁ ≥ 0.005 mm², the cycle fatigue count of the battery cell 10 is larger, the fatigue resistance strength of the region where the first groove 61 is disposed on the first wall portion 13 is improved, and the long-term reliability of the battery cell 10 during normal use is improved, thereby effectively increasing the service life of the battery cell 10.

From the comparison between Examples 3-5 and Examples 1-2, it can be seen that when W×D₁ ≥ 0.01 mm², the cycle fatigue count of the battery cell 10 is larger, which further increases the service life of the battery cell 10. From the comparison between Examples 3-5 and Examples 6-9, it can be seen that when W×D₁ ≤ 0.05 mm², the pressure holding duration of the battery cell 10 during thermal runaway is shorter, and the pressure relief timeliness of the battery cell 10 during thermal runaway is better, which can further improve the reliability of the battery cell 10.

The above examples are only intended to illustrate the technical solutions of the present application, and are not intended to limit the present application, and for those skilled in the art, the present application may be subjected to various changes and variations. Any modifications, equivalent substitutions, improvements, etc. made within the spirit and principles of the present application shall fall into the scope of protection of the present application.

## Claims

1. A battery cell, comprising:
a shell comprising a first wall portion; and
a pressure relief component disposed on the first wall portion, the pressure relief component being provided with a first groove and configured to be capable of rupturing along at least part of the first groove when the battery cell undergoes pressure relief;
wherein the first groove comprises at least one groove segment, a minimum width of a groove bottom surface of the groove segment being W, and along a thickness direction of the first wall portion, a minimum residual thickness of the groove segment being D₁, satisfying: 0.005 mm² ≤ W×D₁ ≤ 0.12 mm².

2. The battery cell of claim 1, wherein 0.01 mm² ≤ W×D₁ ≤ 0.05 mm².

3. The battery cell of claim 1 or 2, wherein 0.05 mm ≤ W ≤ 0.5 mm; optionally, 0.1 mm ≤ W ≤ 0.3 mm.

4. The battery cell of any one of claims 1 to 3, wherein 0.05 mm ≤ D₁ ≤ 0.6 mm; optionally, 0.08 mm ≤ D₁ ≤ 0.4 mm.

5. The battery cell of any one of claims 1 to 4, wherein the first groove defines at least one predetermined pressure relief region, and the pressure relief component is provided with a second groove, the second groove being configured to guide at least part of the predetermined pressure relief region to flip to open at least part of the predetermined pressure relief region.

6. The battery cell of claim 5, wherein a minimum residual thickness of the second groove is D₂, satisfying: D₁ < D₂.

7. The battery cell of claim 6, wherein along the thickness direction of the first wall portion, a maximum groove depth of the groove segment is H₁, and a maximum groove depth of the second groove is H₂, satisfying: H₂ < H₁.

8. The battery cell of any one of claims 5 to 7, wherein the pressure relief component is provided with a plurality of second grooves, and the first groove defines a plurality of predetermined pressure relief regions, each of the predetermined pressure relief regions being disposed in correspondence with at least one of the second grooves.

9. The battery cell of any one of claims 5 to 8, wherein along the thickness direction of the first wall portion, a projection of the second groove and a projection of the first groove do not overlap.

10. The battery cell of claim 9, wherein along a width direction of the second groove, the second groove and the first groove are disposed at intervals.

11. The battery cell of any one of claims 5 to 10, wherein along the thickness direction of the first wall portion, the two ends of a projection of the second groove along an extension direction respectively extend beyond the two end portions of a projection of the first groove.

12. The battery cell of any one of claims 5 to 11, wherein along the thickness direction of the first wall portion, the pressure relief component has a first surface and a second surface oppositely disposed, the first groove being disposed on the first surface, and the second groove being disposed on the second surface.

13. The battery cell of claim 12, wherein the first surface is a surface of the pressure relief component facing an exterior of the shell, and the second surface is a surface of the pressure relief component facing an interior of the shell.

14. The battery cell of any one of claims 5 to 13, wherein along the thickness direction of the first wall portion, the pressure relief component has a second surface facing an interior of the shell, the second groove being disposed on the second surface.

15. The battery cell of any one of claims 5 to 14, wherein the first wall portion is a rectangular wall portion, and the first groove and the second groove are arranged along a width direction of the first wall portion.

16. The battery cell of any one of claims 5 to 15, wherein the second groove extends along a linear trajectory.

17. The battery cell of any one of claims 1 to 16, wherein along the thickness direction of the first wall portion, the pressure relief component has a first surface and a second surface oppositely disposed, and the groove segment comprises a multi-stage groove sequentially disposed in a direction from the first surface toward the second surface, wherein in two adjacent stages of grooves, one stage of groove away from the first surface is disposed on a groove bottom surface of one stage of groove close to the first surface;
wherein one stage of groove in the multi-stage groove that is farthest away from the first surface is a first-stage groove, a minimum residual thickness of the first-stage groove being the minimum residual thickness of the groove segment, and a groove bottom surface of the first-stage groove being the groove bottom surface of the groove segment.

18. The battery cell of any one of claims 1 to 17, wherein the first groove comprises a plurality of groove segments, the plurality of groove segments comprising a first groove segment and a second groove segment, wherein the first groove segment is connected with the second groove segment, and the first groove segment and the second groove segment collectively define at least one predetermined pressure relief region.

19. The battery cell of any one of claims 1 to 17, wherein the first groove comprises a plurality of groove segments, the plurality of groove segments comprising a first groove segment, a second groove segment, and a third groove segment, wherein the second groove segment and the third groove segment are oppositely disposed, the first groove segment connects the second groove segment and the third groove segment, and the first groove segment, the second groove segment, and the third groove segment collectively define at least one predetermined pressure relief region.

20. The battery cell of claim 19, wherein a connection position between the second groove segment and the first groove segment deviates from the two ends of the second groove segment, and a connection position between the third groove segment and the first groove segment deviates from the two ends of the third groove segment, so as to form the predetermined pressure relief regions on both sides of the first groove segment.

21. The battery cell of claim 19 or 20, wherein the first groove segment extends along a linear or arc-shaped trajectory; and/or the second groove segment extends along a linear or arc-shaped trajectory; and/or the third groove segment extends along a linear or arc-shaped trajectory.

22. The battery cell of any one of claims 1 to 17, wherein the first groove extends along an arc-shaped trajectory.

23. The battery cell of any one of claims 1 to 22, wherein the pressure relief component is integrally formed with the first wall portion; or the pressure relief component is disposed separately from the first wall portion, and the pressure relief component is installed on the first wall portion.

24. The battery cell of any one of claims 1 to 23, wherein the first groove is formed by stamping in the pressure relief component.

25. The battery cell of any one of claims 1 to 24, wherein the shell comprises:
a shell body, of which at least one end is formed with an opening; and
an end cover in one-to-one correspondence with the opening, the end cover closing the opening;
wherein at least one end cover is the first wall portion.

26. The battery cell of any one of claims 1 to 25, wherein the shell comprises:
a shell body, of which at least one end is formed with an opening; and
an end cover in one-to-one correspondence with the opening, the end cover closing the opening;
wherein at least one wall portion in the shell body is the first wall portion.

27. The battery cell of claim 26, wherein only one end of the shell body is formed with the opening, and a wall portion of the shell body disposed opposite to the end cover is the first wall portion.

28. The battery cell of claim 26, wherein two opposite ends of the shell body are both formed with the openings, and at least one wall portion in the shell body is the first wall portion.

29. The battery cell of any one of claims 1 to 28, wherein a material of the pressure relief component comprises a steel material.

30. The battery cell of claim 29, wherein the steel material is carbon steel or stainless steel.

31. The battery cell of any one of claims 1 to 28, wherein a material of the pressure relief component comprises aluminum alloy.

32. The battery cell of claim 31, wherein the aluminum alloy comprises components at percentage mass contents of: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other single element ≤ 0.03%.

33. The battery cell of claim 31, wherein the aluminum alloy comprises components at percentage mass contents of: aluminum ≥ 96.7%, 0.05% ≤ copper ≤ 0.2%, iron ≤ 0.7%, manganese ≤ 1.5%, silicon ≤ 0.6%, zinc ≤ 0.1%, components of other individual elements ≤ 0.05%, and total components of other elements ≤ 0.15%.

34. A battery, comprising the battery cell of any one of claims 1 to 33.

35. An electrical device, comprising the battery cell of any one of claims 1 to 33, the battery cell being used to provide electrical energy to the electrical device.
